(19) Europäisches Patentamt
European Patent Office
Office européen des brevets

(11) EP 0 702 866 B1

(12) # FASCICULE DE BREVET EUROPEEN

(45) Date de publication et mention de la délivrance du brevet:
**09.09.1998 Bulletin 1998/37**

(21) Numéro de dépôt: **94918415.4**

(22) Date de dépôt: **07.06.1994**

(51) Int Cl.[6]: **H04B 7/208**, H04B 7/01

(86) Numéro de dépôt international:
**PCT/FR94/00670**

(87) Numéro de publication internationale:
**WO 94/29971 (22.12.1994 Gazette 1994/28)**

(54) **PAQUET DE SIGNALISATION POUR SYSTEME DE COMMUNICATION AVEC REFERENCE MODULEE SUIVANT UNE LOI FONCTION DU TEMPS**

SIGNALISATIONSPAKET FüR KOMMUNIKATIONSSYSTEM MIT MODULIERTER REFERENZ DIE EINEM ZEITABHAENGIGEN GESETZ FOLGT

SIGNALING PACKET FOR COMMUNICATION SYSTEM WITH MODULATED REFERENCE ACCORDING TO A TIME-BASE LAW

(84) Etats contractants désignés:
**AT BE CH DE DK ES FR GB IT LI NL SE**

(30) Priorité: **07.06.1993 FR 9306791**
**07.06.1993 FR 9306792**

(43) Date de publication de la demande:
**27.03.1996 Bulletin 1996/13**

(73) Titulaire: **ALCATEL ALSTHOM COMPAGNIE GENERALE D'ELECTRICITE**
**75008 Paris (FR)**

(72) Inventeurs:
- **CHIODINI, Alain**
  **F-92100 Boulogne (FR)**
- **KUMAR, Vinod**
  **F-75005 Paris (FR)**
- **THIENPONT, Jean-Marc**
  **F-75017 Paris (FR)**

(74) Mandataire: **Renaud-Goud, Thierry et al**
**c/o ALCATEL ALSTHOM,**
**Département de Propriété Industrielle,**
**30, avenue Kléber**
**75116 Paris (FR)**

(56) Documents cités:
**EP-A- 0 305 814** **EP-A- 0 337 267**
**DE-A- 2 641 156** **FR-A- 2 683 689**
**US-A- 4 019 138** **US-A- 5 095 538**

- **IBM TECHNICAL DISCLOSURE BULLETION, vol.6, no.11, Avril 1964, NEW-YORK,US; page 32 R.E.BUCK 'Matched-filter doppler acquisition system'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 702 866 B1

## Description

La présente invention concerne un système de communication comportant des moyens de réception de signaux de communication transmis sur une pluralité de canaux de transmission.

Dans les systèmes de communication, le système paneuropéen cellulaire numérique de radiocommunication connu sous le nom de système GSM par exemple, les communications transitent entre un terminal et une station de base par des canaux de communication véhiculant des signaux radio. De tels systèmes comprennent une pluralité de canaux prévus soit pour l'émission des terminaux à destination des stations de base, soit pour l'émission des stations de base à destination des terminaux.

Parmi ces derniers canaux, figure un canal de contrôle émis en permanence qui permet à un terminal d'accéder au système par la station de base qui émet ce canal afin de pouvoir établir des communications. Le terminal doit donc identifier ce canal de contrôle pour acquérir les informations qui lui permettent de se déclarer dans le système. Parmi ces informations on trouve notamment des informations de synchronisation, c'est pourquoi il est habituel de parler de procédure de synchronisation.

La solution généralement adoptée pour la synchronisation se déroule en deux étapes. Dans un premier temps le terminal mesure la puissance de tous les canaux affectés à la réception. Ensuite, le terminal essaie de se synchroniser sur le canal reçu avec la plus forte puissance et s'il n'y parvient pas, il essaie sur les autres canaux en les prenant par ordre de puissance à la réception décroissante jusqu'à ce qu'il puisse effectivement se synchroniser. Cette solution est d'ailleurs celle qui figure dans les recommandations 4.08 et 5.08 du GSM.

La procédure de synchronisation est engagée systématiquement lorsque le terminal est mis en marche mais aussi, de manière plus générale, à la suite d'une perte de synchronisation, c'est-à-dire lorsque la liaison radio acheminée notamment par le canal de contrôle entre la station de base et le terminal a été interrompue. Cette interruption peut être volontaire, il s'agit par exemple de l'arrêt du terminal, mais elle peut également être involontaire. En effet, il peut arriver que le terminal soit provisoirement dans l'impossibilité de se synchroniser car les conditions de réception radio ne sont pas satisfaisantes. C'est par exemple le cas lorsqu'il est dans un tunnel ou plus généralement lorsqu'il se trouve dans une zone d'ombre au sens radio du terme.

La synchronisation proprement dite comprend généralement deux phases. La première phase dite synchronisation fréquentielle consiste à faire l'acquisition de la référence de fréquence de la station de base, tandis que la seconde phase, dite synchronisation temporelle consiste à faire l'acquisition de la référence de temps de la station de base.

Le GSM prévoit à cet effet que le canal de contrôle BCCH comporte deux sous-canaux, un sous-canal de contrôle de fréquence FCH pour la synchronisation fréquentielle et un sous-canal de synchronisation SCH pour la synchronisation temporelle.

Le sous-canal de contrôle de fréquence se présente sous la forme d'un paquet correspondant à une sinusoïde pure émis à intervalles de temps réguliers. Le terminal doit donc rechercher ce paquet pendant une durée qui correspond sensiblement à la période de répétition du paquet.

Du fait de la nature du paquet et des moyens mis en oeuvre pour sa détection, il n'est pas possible de déterminer son début ni sa durée, si bien qu'il est nécessaire de recourir au sous-canal de synchronisation pour obtenir la synchronisation temporelle.

Le sous-canal de synchronisation suit le sous-canal de contrôle de fréquence avec un retard connu. Il comprend une séquence de symboles pourvue d'une fonction d'autocorrélation convenable. Le terminal qui connaît cette séquence de synchronisation procède donc à la corrélation de cette séquence avec la séquence des symboles reçus. Du fait de l'imprécision sur la référence temporelle de la station de base, le terminal ne connaît pas avec précision lequel des symboles reçus correspond au premier symbole de la séquence de synchronisation et il faut donc procéder à de nombreuses corrélations en décalant l'une des séquences par rapport à l'autre afin d'identifier le pic de corrélation.

Un premier but de l'invention est donc d'améliorer les performances de la procédure de synchronisation.

Par ailleurs, dans la plupart des systèmes de radiocommunication la chaîne de transmission des signaux radio comprend un élément qui est mobile. La conséquence de cet état de fait est qu'un tel signal radio voit sa fréquence modifiée suite à l'effet Doppler.

Le décalage Doppler se produit naturellement dans le GSM si le terminal est mobile, et sa valeur est d'autant plus grande que la vitesse du terminal est élevée. Or s'il est relativement aisé de détecter la sinusoïde pure du sous-canal de contrôle de fréquence lorsque celle-ci a une fréquence connue, au moyen d'un filtre sélectif par exemple, il n'en est pas de même lorsque cette fréquence est affectée d'un décalage Doppler inconnu. Il faut alors prévoir un filtre dont la bande passante tient compte du décalage Doppler maximum dans les deux sens, ce qui conduit à une sérieuse dégradation des performances du filtre.

De plus, le déplacement de fréquence est beaucoup plus important dans les systèmes utilisant des satellites défilant, ce qui est le cas notamment du système connu sous le nom de Globalstar.

Le principe d'un tel système est d'utiliser un satellite, qui défile en orbite basse à une altitude par exemple d'environ 1390 kilomètres et selon une vitesse par exemple de l'ordre de 7,2 kilomètres par seconde, comme relais entre le

terminal et la station de base.

Le satellite reçoit donc le signal radio en provenance de la station de base et la réémet en direction du terminal. Le rôle joué par ce satellite est un simple rôle de "miroir" : il transmet tel que le signal qu'il reçoit de la station de base, en effectuant tout au plus une transposition de fréquence.

Le déplacement fréquentiel dépend de la vitesse et de la position relative du satellite par rapport au terminal, qui lui-même peut être considéré comme fixe.

Il apparaît qu'il faut corriger ce déplacement de fréquence.

Un second but de l'invention est donc de fournir des moyens de correction du décalage fréquentiel dû à l'effet Doppler.

D'autre part, dans les systèmes de radiocommunication, les canaux de communication proprement dits sont souvent transmis comme suit.

Un émetteur émet une séquence de symboles dans un canal de transmission à destination d'un récepteur. La séquence émise subit des altérations dans le canal de transmission si bien que la séquence de symboles reçus par le récepteur ne lui est pas identique. La principale de ces altérations est l'interférence entre symboles qui est due au fait qu'un symbole émis peut emprunter plusieurs trajets dans le canal de transmission. En effet si deux trajets au moins présentent un écart supérieur à la distance séparant deux symboles émis successivement, un symbole empruntant un de ces trajets va venir interférer avec un symbole suivant empruntant un autre trajet plus court.

Pour corriger l'interférence entre symboles dans le récepteur, on utilise un égaliseur qui, pour fonctionner correctement, doit connaître la réponse impulsionnelle du canal de transmission. A cette fin, des symboles particuliers émis dans une séquence d'apprentissage sont des symboles connus. La séquence d'apprentissage est choisie en fonction des caractéristiques du canal de transmission et plus particulièrement en fonction de sa longueur.

En effet, compte tenu du fait que les symboles sont émis régulièrement et présentent donc une périodicité que l'on nomme durée-symbole, la longueur du canal se définit comme le nombre de durée-symboles qui est équivalent à la différence du trajet le plus long et du trajet le plus court de ce canal.

Pour établir la réponse impulsionnelle du canal, on utilise, dans le récepteur, un dispositif d'estimation de canal qui génère une réplique de cette séquence d'apprentissage et la corrèle avec la séquence correspondante de symboles reçus. Le résultat de la corrélation est un jeu de coefficients $h_i$ où i varie de O à L, L étant la longueur du canal, ce jeu de coefficients étant prévu pour renseigner l'égaliseur. Le trajet le plus direct du canal est représenté par $h_o$, tandis que les autres coefficients représentent les trajets plus longs qui produisent des interférences avec le premier.

Il apparaît que l'estimation du canal ne peut être réalisée qu'une fois que la synchronisation a été réalisée. De plus, il faut prévoir un paquet spécifique, la séquence d'apprentissage, à cet effet.

Un troisième but de l'invention est donc de fournir des moyens pour l'estimation du canal.

En résumé, dans tout système de communication, on s'aperçoit qu'il faut de nombreux signaux de signalisation pour établir une communication. Le terme de synchronisation se comprend ici dans le sens le plus général et comprend notamment les informations de synchronisation, celles nécessaires à la correction du décalage Doppler, celles qui sont utiles pour l'estimation du canal de transmission.

Certes, dans le document FR-2 683 689, on décrit un système de communication comportant des moyens de réception de signaux de communication que l'on peut considérer comme transmis sur une pluralité de canaux de transmission. L'un de ces signaux, paquet-test ou "bouchon", est utilisé pour la synchronisation temporelle et l'égalisation de canal de transmission. Mais, composé de données, il n'a aucun contenu fréquentiel de nature à permettre une synchronisation fréquentielle tandis que la synchronisation temporelle est basée sur la reconnaissance de données contenues dans ce paquet-test ou bouchon ; technique coûteuse et lente.

La présente invention a ainsi pour objet de simplifier les traitements de ces signaux de signalisation.

A cet effet on prévoit un système de communication conforme à la partie caractéristique de la revendication 1.

En outre, la loi de modulation peut être une fonction linéaire du temps.

Plus spécifiquement, si cette loi de modulation est appliquée sur deux voies en quadrature, on peut prévoir deux fonctions distinctes sur chacune de ces voies.

On obtient ainsi un signal de référence qui comporte de manière intrinsèque une information qui permet de retrouver l'instant d'émission d'un point quelconque de ce signal.

Une première application consiste à réaliser un dispositif d'estimation du décalage Doppler d'une porteuse véhiculant un tel paquet de signalisation comprenant :

- un oscillateur local,
- un mélangeur recevant la porteuse et le signal de sortie de l'oscillateur local,
- un filtre recevant le signal de sortie du mélangeur pour produire un signal à fréquence intermédiaire,
- un circuit d'analyse recevant le signal à fréquence intermédiaire pour produire un signal de déplacement représentant l'écart de fréquence dû à l'effet Doppler entre une fréquence théorique et la fréquence du signal à fréquence intermédiaire,

- un circuit de commande commandant l'oscillateur local pour établir une estimation du décalage Doppler à partir du signal de déplacement.

De plus, dans ce dispositif, le circuit de commande commande l'oscillateur local pour réduire cet écart de fréquence.

Selon un premier mode de réalisation de ce dispositif, le circuit d'analyse comprend au moins un premier filtre adapté au signal de référence et centré sur la fréquence théorique, un circuit de correction pour produire un premier facteur de forme du signal de sortie de ce filtre, et le circuit de commande agit sur l'oscillateur local pour maximiser le premier facteur de forme.

De plus, le circuit de commande commande l'oscillateur local par approximations successives en appliquant une correction de fréquence de part et d'autre de la fréquence qui produit le plus grand facteur de forme afin de rechercher à nouveau le facteur de forme le plus élevé, les recherches successives s'effectuant en diminuant la valeur de la correction de fréquence jusqu'à un seuil de correction prédéterminé.

Ou bien, une amplitude de décalage valant sensiblement le maximum du décalage Doppler du signal à fréquence intermédiaire, le dispositif comprend de plus un deuxième et un troisième filtre adapté au signal de référence et centré sur la fréquence théorique diminuée respectivement augmentée de l'amplitude de décalage, le circuit de correction établissant outre le premier facteur de forme un deuxième et un troisième facteur de forme du signal de sortie du deuxième respectivement du troisième filtre adapté, et produisant le signal de déplacement proportionnel à l'opposé du barycentre des fréquences centrales des filtres adaptés pondérées par les facteurs de forme correspondant.

On peut prévoir que le circuit de commande commande l'oscillateur local de sorte que le signal à fréquence intermédiaire ait une fréquence augmentée du signal de déplacement.

Une deuxième application consiste à réaliser un dispositif de synchronisation sur une porteuse véhiculant un tel paquet de signalisation, le signal de référence ayant une durée T et étant émis périodiquement avec une période de répétition $T_r$, une période de mesure ayant une durée prédéterminée supérieure ou égale à $T + T_r$, ce dispositif comprenant :

- un oscillateur local,
- un mélangeur recevant la porteuse et le signal de sortie de l'oscillateur local,
- un filtre recevant le signal de sortie du mélangeur pour produire un signal à fréquence intermédiaire,
- un circuit d'analyse recevant le signal à fréquence intermédiaire pour produire d'une part un signal de changement de fréquence si le signal de référence n'est pas détecté et d'autre part un signal de déplacement de fréquence représentant l'écart entre une fréquence théorique et la fréquence du signal à fréquence intermédiaire,
- un circuit de commande commandant l'oscillateur local pour qu'il s'accorde sur la porteuse puis, à la suite d'une période de mesure, pour qu'il s'accorde sur une autre porteuse en présence du signal de changement de fréquence ou bien pour réduire la valeur du signal de déplacement de fréquence en l'absence du signal de changement de fréquence.

De plus, le circuit d'analyse comprend au moins un premier filtre adapté au signal de référence et centré sur la fréquence théorique, un circuit de correction pour produire un premier facteur de forme du signal de sortie de ce filtre, et le circuit de commande agit sur l'oscillateur local pour maximiser le premier facteur de forme.

En outre, le circuit de commande commande l'oscillateur local par approximations successives en appliquant une correction de fréquence de part et d'autre de la fréquence qui produit le plus grand facteur de forme afin de rechercher à nouveau le facteur de forme le plus élevé, les recherches successives s'effectuant en diminuant la valeur de cette correction de fréquence jusqu'à un seuil de correction prédéterminé.

Selon une variante du dispositif de synchronisation, le signal de référence étant émis périodiquement avec une période de répétition $T_r$, ce dispositif comprend :

- un oscillateur local,
- un mélangeur recevant la porteuse et le signal de sortie de l'oscillateur local,
- un filtre recevant le signal de sortie du mélangeur pour produire un signal à fréquence intermédiaire,
- un circuit d'analyse recevant le signal à fréquence intermédiaire pour produire un signal de déplacement de fréquence représentant l'intervalle de temps séparant la réception de deux paquets de signalisation successifs,
- un circuit de commande commandant l'oscillateur local pour réduire l'écart entre le signal de déplacement de fréquence et la période de répétition $T_r$.

Une troisième application consiste à réaliser un dispositif d'estimation d'un canal de transmission au moyen d'une porteuse véhiculant un tel paquet de signalisation comprenant :

- un oscillateur local,

- un mélangeur recevant la porteuse et le signal de sortie de l'oscillateur local,
- un filtre recevant le signal de sortie du mélangeur pour produire un signal à fréquence intermédiaire,
- un circuit d'analyse recevant le signal à fréquence intermédiaire et le ramenant en bande de base pour produire un spectre de ce canal,
- un circuit de commande commandant l'oscillateur local pour établir une estimation de ce canal à partir du spectre de canal.

De plus, le signal de référence présentant une fréquence de pente constante $-\mu$, le circuit de commande commande l'oscillateur local pour qu'il produise une fréquence dont la pente $\mu$ est opposée à celle du signal de référence à compter de la réception de ce signal par le trajet $t_0$ le plus court du canal, le spectre de canal présentant un ensemble de raies identifiées chacune par sa fréquence $r_i$ et son amplitude $h_i$, une raie déterminée correspondant à un trajet $t_i$ et ayant une fréquence en rapport avec la longueur de ce trajet, le circuit de commande produisant cette estimation en caractérisant chaque trajet $t_i$ par sa contribution qui est proportionnelle à l'amplitude de la raie correspondante $h_i$ et par son retard $\tau_i$ qui vaut $(r_i - r_0)/\mu$, ceci pour tout i compris entre 0 et n si l'on considère (n + 1) trajets distincts.

L'invention apparaîtra maintenant de manière plus précise dans le cadre d'exemples de réalisation en se référant aux figures annexées qui représentent :

- la figure 1, un exemple de signal de référence selon l'invention,
- la figure 2, un schéma représentant les éléments nécessaires à la mise en oeuvre d'un dispositif appliquant l'invention,
- la figure 3, la forme du signal d'entrée et du signal de sortie d'un filtre adapté employé dans un mode de réalisation de l'invention,
- la figure 4, la caractéristique fréquentielle en fonction du temps d'un signal en bande de base utilisé pour l'estimation d'un canal de transmission,
- la figure 5, une variante d'un signal de référence selon l'invention,
- la figure 6, ce signal tel que reçu par un terminal,
- la figure 7, une structure de multitrame de signalisation,
- la figure 8, un schéma synoptique d'un dispositif de synchronisation,
- la figure 9, un schéma synoptique d'un dispositif de détermination de la valeur absolue du décalage Doppler,
- la figure 10, un schéma synoptique d'un dispositif simplifié de détermination de la valeur absolue du décalage Doppler,
- la figure 11, un schéma synoptique d'un dispositif de détermination du signe du décalage Doppler,
- la figure 12, un schéma synoptique d'un dispositif de correction du décalage Doppler,
- la figure 13, un schéma synoptique d'un dispositif de suivi du décalage Doppler.

En premier lieu, il convient de définir le paquet de signalisation objet de l'invention, en référence à la figure 1. Un paquet se définit comme le support d'un signal pendant une durée déterminée T. Ici ce signal, le signal de référence a une fréquence qui varie linéairement en fonction du temps. Si l'on prend comme origine du temps t le début du paquet, la fréquence instantanée f de ce signal peut alors se représenter par l'expression suivante :

$$f = \left(\frac{f_2 - f_1}{T}\right) . t + f_1$$

Le signal est supposé d'amplitude constante et il peut se présenter naturellement sous une forme analogique ou bien numérique.

D'autre part, ce paquet est transmis sur une porteuse de fréquence C, ce qui est usuel dans les systèmes de transmission.

Ce paquet de signalisation se prête avantageusement à l'estimation et à la correction de décalage Doppler auquel est soumis la porteuse et cette application sera maintenant présentée.

La figure 2 représente les éléments d'un récepteur nécessaire dans un mode de réalisation parmi d'autres possibles. De manière connue, ce récepteur comprend donc une antenne A pour recevoir la porteuse. Cette antenne est suivie d'un amplificateur LNA, généralement un amplificateur faible bruit.

Le récepteur comprend également un mélangeur M qui reçoit d'une part le signal de sortie de l'amplificateur LNA et d'autre part le signal de sortie d'un oscillateur local VCO, un oscillateur commandé en tension par exemple. Cet oscillateur est commandé par un circuit de commande CC dont la fonction sera précisée par la suite. La sortie du mélangeur est raccordée à un filtre passe-bande BP qui produit comme signal de sortie un signal à fréquence intermédiaire IF. Ce filtre passe bande est réalisé conformément aux critères usuels de réjection de bande latérale et de distorsion de phase. Sa fréquence centrale et sa bande passante seront définies par la suite.

Le récepteur est prévu pour travailler à une fréquence intermédiaire bien précise que l'on appellera fréquence théorique $f_T$, et qui correspond au cas où il n'y a pas de décalage Doppler.

Si l'on considère maintenant que la porteuse est soumise à l'effet Doppler, le signal à fréquence intermédiaire va voir sa fréquence varier entre $f_T$ - Af et $f_T + \Delta f$ où $\Delta f$ représente l'amplitude de décalage Doppler, ceci pour une valeur de commande de l'oscillateur local VCO qui devrait conduire à une fréquence égale à $f_T$. Par conséquent on choisira la fréquence centrale du filtre passe-bande BP égale à $f_T$ et sa bande passante égale à celle du signal augmentée de $2.\Delta f$.

Selon l'invention, le récepteur comprend trois filtres adaptés au signal de référence :

- le premier MF1 centré sur la fréquence théorique $f_T$,
- le second MF2 centré sur la fréquence théorique $f_T$ diminuée de l'amplitude de décalage Doppler, soit $f_T - \Delta f$,
- le troisième MF3 centré sur la fréquence théorique $f_T$ augmentée de l'amplitude de décalage Doppler, soit $f_T + \Delta f$.

Ces filtres adaptés peuvent consister, à titre d'exemple, en des filtres à ondes de surface.

Dans ce cas, on a représenté à la figure 3 le signal d'entrée X et l'enveloppe Y du signal de sortie d'un tel filtre en prenant la même échelle de temps.

Ce filtre présente un temps de propagation Tp et produit un signal de sortie dont la forme bien connue de l'homme du métier est en sinx/x amorti et qui présente donc un lobe principal dont la valeur crête vaut $A_c$ et dont la largeur mesurée à une amplitude valant cette valeur crête $A_c$ diminuée d'une valeur prédéterminée $A_d$ (20 dB par exemple) vaut Tc.

On détermine un facteur de forme W qui caractérise la forme du lobe principal. On pourrait choisir la valeur crête $A_c$, ou bien l'énergie contenue dans ce lobe ou bien encore la largeur $T_c$ de ce lobe. Ici, à titre d'exemple on choisit le rapport de la valeur crête $A_c$, à la largeur $T_c$ :

$$W = A_c/T_c$$

Chacun des trois filtres adaptés MF1, MF2, MF3 a une bande passante prévue pour qu'un signal d'entrée correspondant au signal de référence mais décalée en fréquence de $\Delta f$ par rapport à sa fréquence d'accord donne lieu à un facteur de forme W de valeur supérieure à un seuil de détection $S_d$ de sorte que le lobe principal correspondant puisse être détecté.

Le récepteur comprend de plus un circuit de correction CORR représenté dans la figure 2. Ce circuit reçoit les signaux de sortie des premiers MF1, second MF2 et troisième MF3 filtre adapté pour calculer respectivement un premier $W_1$, un second $W_2$ et un troisième $W_3$ facteur de forme. Un facteur de forme dont la valeur est inférieure au seuil de détection $S_d$ est forcé à zéro. Si le premier facteur de forme $W_1$ est non nul, le circuit produit un signal de changement de fréquence CF à destination du circuit de commande CC, ce signal étant utilisé dans une autre application détaillée par la suite.

De plus si le premier facteur de forme $W_1$ est non nul, le circuit de correction CORR produit un signal de déplacement SH, également à destination du circuit de commande, comme suit :

$$SH = \frac{W_2 - W_3}{W_1 + W_2 + W_3} . \Delta f$$

Il s'agit en fait de l'opposé du barycentre des fréquences centrales des filtres adaptés pondérées par les facteurs de forme correspondant. On peut également choisir d'appliquer une valeur proportionnelle à ce barycentre ou de tout autre nature pourvu qu'elle représente l'écart entre la fréquence théorique $f_T$ et la fréquence du signal à fréquence intermédiaire.

On rappelle que l'on s'attache à mesurer et à corriger le décalage Doppler de la porteuse C, sur laquelle, par hypothèse, figure le paquet de signalisation.

On rappelle de plus que le paquet de signalisation de durée T est émis périodiquement selon une période de répétition $T_r$.

Ainsi le circuit de commande CC commande l'oscillateur local VCO de sorte que le signal à fréquence intermédiaire IF soit à la fréquence $f_T$ lorsque la porteuse n'est pas affectée de Doppler. Au bout d'une période de mesure au moins égale à $T + T_r$, le circuit de correction aura nécessairement établi que le premier facteur de forme $W_1$ est non nul puisque le premier filtre adapté a été réalisé à cet effet.

Le circuit de commande reçoit à la fin de cette première période de mesure le signal de déplacement SH qui prend ici pour valeur $D_1$. Il commande alors l'oscillateur local VCO pour qu'il produise une fréquence augmentée de $D_1$.

Il attend alors une deuxième période de mesure pour lire la nouvelle valeur $D_2$ du signal de déplacement SH et corrige à nouveau l'oscillateur local VCO pour qu'il produise une fréquence augmentée de $D_2$. Et ainsi de suite, si bien qu'après la nième période de mesure, le signal de déplacement SH vaut $D_n$.

Lorsque $D_n$ est inférieur à un seuil de correction $S_c$ qui est estimé suffisant dans la présente application, 100 Hz par exemple, le décalage Doppler est corrigé et sa valeur D vaut :

$$D = \sum_{i=1}^{n} D_i$$

On a prévu jusqu'à présent d'utiliser trois filtres adaptés. Or, dans de nombreux cas, l'amplitude du décalage Doppler $\Delta f$ permet de réaliser un seul filtre adapté centré sur la fréquence théorique $f_T$ dont la bande passante est calculée de sorte que son facteur de forme soit supérieur au seuil de détection $S_d$ si le signal d'entrée correspond au signal de référence décalé de $\pm \Delta f$.

Dans ce cas, le circuit de commande CC commande l'oscillateur local VCO de sorte que le signal à fréquence intermédiaire IF soit à la fréquence $f_T$ lorsque la porteuse n'est pas affectée de Doppler.

Le circuit de correction CORR produit maintenant comme signal de déplacement SH le facteur de forme issu de l'unique filtre adapté.

Au bout d'une première période de mesure, le facteur de forme vaut $W_{T0}$. Le circuit de commande CC commande alors l'oscillateur local VCO pour qu'il diminue la fréquence intermédiaire de $\Delta f/2$ puis enregistre au bout d'une seconde période de mesure la valeur $W_{m0}$ du facteur de forme. Le circuit de commande CC commande alors l'oscillateur local VCO pour qu'il augmente la fréquence intermédiaire de $\Delta f/2$ puis enregistre au bout d'une troisième période de mesure la valeur $W_{M0}$.

Il recherche alors laquelle des trois valeurs $W_{T0}$, $W_{m0}$, $W_{M0}$ est la plus grande. On conviendra de la noter $W_{T1}$ et il apparaît que la fréquence $F_1$ qui a produit cette valeur est la plus proche de la fréquence d'accord.

Le circuit de commande CC commande maintenant l'oscillateur local VCO pour qu'il produise la fréquence intermédiaire $F_1 - \Delta f/4$. Au bout d'une quatrième période de mesure, il enregistre la valeur $W_{m1}$ du signal de déplacement. Il recherche alors laquelle des trois valeurs $W_{T1}$, $W_{m1}$ ou $W_{M1}$ est la plus grande. On conviendra de la noter $W_{T2}$ et il apparaît que la fréquence $F_2$ qui a produit cette valeur est la plus proche de la fréquence d'accord.

On procède ensuite de même en commandant l'oscillateur local pour obtenir les fréquences intermédiaires $F_2 \pm \Delta f/8$. Et on poursuit cette recherche par approximations successives en divisant par deux l'excursion de fréquence à chaque pas pour obtenir $F_n$ de sorte que $\Delta f/2^n$ soit inférieur à un seuil de correction $S_c$ qui est estimé suffisant dans la présente application, 100 Hz par exemple.

Le décalage Doppler est alors corrigé et sa valeur vaut $F_n - f_T$.

On a décrit le dispositif de correction de décalage Doppler avec un ou trois filtres adaptés réalisés selon la technologie dite à onde de surface. Cet exemple a été choisi car il est bien connu de l'homme de métier, notamment lorsque la fréquence intermédiaire est de l'ordre d'une dizaine à quelques dizaines de MHz.

L'homme de métier comprend tout aussi bien que ces filtres peuvent être réalisés en technologie numérique au moyen d'un processeur numérique de signal. Cette réalisation est particulièrement bien adaptée au cas des systèmes dits à bande étroite, dans lesquels des canaux sont espacés de l'ordre de 30 kHz par exemple. On peut alors choisir une fréquence intermédiaire égale à zéro pour traiter directement le signal en bande de base.

Il apparaît de plus que l'ensemble des filtres adaptés et du circuit de correction peut se représenter comme une entité que l'on nommera circuit d'analyse.

Par ailleurs, on a présenté le signal de référence comme un signal dont la fréquence varie linéairement avec le temps. Il s'agit bien sûr d'un simple exemple et l'on peut prévoir bien d'autres lois de variations, ceci d'autant plus aisément que le traitement du signal est numérique.

En outre, le circuit d'analyse qui permet d'estimer le décalage Doppler a été réalisé au moyen d'un ou plusieurs filtres. Il existe d'autres solutions, notamment l'analyse spectrale, au moyen d'une transformée de Fourier rapide par exemple, que l'on ne développera pas plus car bien connues de l'homme de métier.

On présentera maintenant un dispositif de synchronisation au moyen du paquet de signalisation déjà décrit.

Le récepteur doit tenter de se synchroniser sur une porteuse au moins parmi une pluralité de porteuses dont les fréquences valent $C_1$ à $C_n$.

En se référant toujours à la figure 2, le circuit de commande CC commande l'oscillateur local VCO pour qu'il s'accorde sur la porteuse $C_1$. Il procède maintenant exactement comme pour la correction du décalage Doppler présentée ci-dessus. Si le circuit de correction produit le signal de changement de fréquence CF, la synchronisation ne

peut pas être obtenue sur cette porteuse et il commande alors l'oscillateur local VCO pour qu'il s'accorde sur une autre fréquence porteuse $C_2$, par exemple.

Si, par contre, le circuit de correction ne produit pas le signal de changement de fréquence, la synchronisation fréquentielle est acquise au bout de n périodes de mesure sur la porteuse $C_1$.

La synchronisation temporelle découle directement de la structure du filtre adapté dont les caractéristiques sont représentées à la figure 3. En effet, celui-ci présente la particularité que le maximum du lobe principal apparaît avec un retard qui vaut la somme des temps de propagation du filtre adapté et de la durée du paquet de signalisation, soit $T_p + T$, par rapport au début de ce paquet. On dispose ainsi d'une référence de temps.

En outre, le circuit de commande peut mesurer la durée séparant les maxima des lobes principaux correspondants à deux paquets de signalisation successifs. Cette durée correspondant à la période de répétition $T_r$. On dispose ainsi d'une unité de temps.

La référence de temps et l'unité de temps étant ainsi acquises, le récepteur est synchronisé temporellement.

Lorsque la synchronisation est acquise, on utilise naturellement les mêmes corrections pour tous les canaux émis par la même station de base qu'ils soient véhiculés par la même porteuse ou par une porteuse différente. D'autre part, on prévoit que ces corrections peuvent évoluer dans le temps comme dans tous les systèmes et on assure par conséquent le suivi de la synchronisation.

On remarquera ici que pour acquérir la synchronisation temporelle, le signal de référence peut prendre les formes les plus diverses pourvu qu'une de ses caractéristiques varie avec le temps. On a prévu jusqu'à présent que c'était la fréquence, mais ce pourrait être l'amplitude, par exemple.

Il suffit que l'on puisse déterminer la position d'un point particulier dans la paquet de signalisation.

Les étapes de correction du décalage Doppler et de synchronisation ont été présentées comme successives alors qu'elles peuvent s'entrelacer. En effet, lors de la correction du décalage Doppler, on a corrigé l'écart de fréquence entre la station de base et le terminal quel que soit sa nature. Or il est possible d'acquérir la référence temporelle de la station de base avant d'effectuer l'estimation du décalage Doppler.

La fréquence de répétition des paquets de signalisation qui est l'inverse de la période de répétition $T_r$ est habituellement liée à la fréquence de la porteuse par une relation de proportionnalité mais lui est très largement inférieure si bien qu'elle est beaucoup moins affectée par l'effet Doppler. On peut donc , dans un premier temps faire l'acquisition de cette fréquence de répétition en mesurant l'intervalle de temps qui sépare deux lobes principaux successifs à la sortie d'un filtre adapté, comme cela a déjà été présenté. On obtient ainsi une bonne approximation de la référence de temps de la station de base et on corrige l'oscillateur local VCO au moyen du cicuit de commande CC pour qu'il adopte cette référence.

On peut maintenant procéder à l'estimation du décalage Doppler comme exposé plus haut, cette estimation n'étant pratiquement plus entachée de l'erreur dûe au décalage des références temporelles de la station de base et du terminal.

On peut ensuite affiner la synchronisation, également comme exposé ci-dessus.

Une solution avantageuse consiste à réaliser la première partie du traitement du signal en analogique, au moyen d'un filtre à ondes de surface à bande passante relativement large par exemple, pour corriger l'oscillateur local VCO du décalage dû à l'écart des références fréquentielles et éventuellement d'une première estimation du décalage Doppler. La suite du traitement peut alors être réalisée en numérique.

On présentera maintenant un dispositif d'estimation de canal au moyen du paquet de signalisation déjà décrit.

Par hypothèse, le canal de transmission comporte n+1 trajets distincts $t_i$ contribuant chacun avec un coefficient $a_i$ dans la transmission et apportant chacun un retard $\tau_i$ dans la transmission par rapport au trajet le plus court $t_o$ pour lequel le retard $\tau_o$ est choisi égal à zéro et constitue donc la référence de temps, alors que i est un nombre entier compris entre 0 et n.

Le signal transmis est le signal de référence représenté à la figure 1 dont la fréquence instantanée f vaut, pour mémoire :

$$f = \left(\frac{f_2 - f_1}{T}\right) . t + f_1$$

Le circuit de commande CC commande l'oscillateur local VCO de sorte que celui-ci produise une fréquence dont la pente présente une valeur opposée à celle du signal de référence à partir de la référence de temps $\tau□_o$, cette pente vaut donc :

$$\mu = \left(\frac{f_1 - f_2}{T}\right)$$

Le circuit d'analyse prend ici la forme d'un module d'analyse spectrale qui traite le signal reçu en bande de base dont les composantes fréquentielles évoluent en fonction du temps comme représenté à la figure 4, à une translation de fréquence près.

Le circuit d'analyse qui procède à la transformée de Fourier du signal en bande de base produit un spectre qui se compose de raies chacune identifiée par sa fréquence $r_i$ et son amplitude $h_i$ où i varie de 0 à n.

La raie principale qui correspond au trajet le plus court correspond à la fréquence $r_o$ la plus élevée du spectre.

La raie suivante qui correspond à un trajet affecté d'un retard $\tau_1$ se présente à une fréquence $r_1$. Connaissant $r_o$ et $r_1$, on en déduit $\tau_1$ comme suit :

$$\tau_1 = \frac{r_1 - r_0}{\mu}$$

Ainsi, la iième raie qui correspond à un trajet affecté d'un retard $\tau_i$ se présente à une fréquence $r_i$. Connaissant $r_o$ et $r_i$ on en déduit $\tau_i$ comme suit :

$$\tau_i = \frac{r_1 - r_0}{\mu}$$

Naturellement, les amplitudes $h_i$ des différentes raies sont proportionnelles aux coefficients $a_i$ et il suffit de faire une simple normalisation pour obtenir ces coefficients.

Le canal est donc bien caractérisé par l'ensemble des couples ($\tau_i$, $a_i$) pour tout i variant de 0 à n.

On fournira l'exemple numérique suivant à titre indicatif :

- excursion de fréquence : $f_2$-$f_1$ = 200 kHz
- longueur du paquet de signalisation : T = 577 µs
- pente du signal de référence : - µ = 346 MHz/s
- résolution ou valeur minimale de $\tau_{i+1} - \tau_i$ : 2 µs.

On entend par résolution la résolution temporelle qui permet de distinguer deux trajets voisins $t_{i+1}$ et $t_i$. On la choisit en général inférieure à une durée-symbole.

Dans ce cas, l'écart de fréquence minimal Δr entre les deux raies successives correspondantes vaudra :

$$\Delta r = r_i - r_{i+1} = 693 \text{ Hz.}$$

En employant une transformée de Fourier rapide travaillant sur N échantillons à une fréquence d'échantillonnage $F_e$, compte tenu de la résolution souhaitée, la relation suivante s'applique :

$$N \geq \frac{F_e}{\Delta r}$$

En choisissant la fréquence d'échantillonnage égale à 400 kHz, on adoptera avantageusement un nombre d'échantillons N de 1024.

Par ailleurs, quel que soit le dispositif considéré, on ajoutera que le signal de référence peut prendre bien d'autres formes que celle correspondant à la figure 1. La loi de variation de fréquence peut être non linéaire et l'on peut prévoir, par exemple, que cette fréquence augmente puis décroisse ou bien l'inverse. L'intérêt de cette solution réside dans le fait que l'on peut effectuer plusieurs des traitements mentionnés ci-dessus au moyen d'un seul paquet de signalisation. Si l'on choisit une modulation numérique pour la porteuse, une modulation de phase convient pour appliquer l'invention. Dans ce cas, on appliquera naturellement une loi de variation de phase connue au signal de référence.

De plus, s'il ressort clairement de la description précédente que l'invention s'applique dans les systèmes à accès

multiple par répartition dans le temps, l'homme du métier transposera sans difficultés cette application dans les systèmes à accès multiple par répartition dans les codes.

Les applications du paquet de signalisation selon l'invention ont été décrites jusqu'à présent dans le domaine des radiocommunications. On peut trouver d'autres domaines, notamment celui des transmissions optiques.

En effet, dans le cas d'une transmission à haut débit sur une fibre optique, il faut utiliser des régénérateurs de signaux qui doivent se synchroniser sur le signal qu'ils reçoivent. Ce problème est généralement résolu en disposant une en-tête au début d'un paquet de symboles à transmettre. Cependant, un symbole s'étale au cours de la transmission, ce qui donne lieu à de l'interférence intersymboles. La conséquence en est que la détection de cette en-tête sera beaucoup plus délicate.

On peut utiliser le signal de référence précédemment décrit à la place de l'en-tête. Outre les avantages déjà cités, ce signal présente une meilleure immunité à l'étalement de symboles.

On présentera maintenant une variante du paquet de signalisation précédemment décrit qui s'applique lorsque le signal de référence est modulé sur deux voies en quadrature conventionnellement notées voie I et voie Q.

Cette variante est particulièrement bien adaptée au système GLOBALSTAR.

Le burst de contrôle de fréquence FCH du GSM est alors remplacé par un burst de remplacement FCCHd défini par ses composantes $s_I(t)$, $s_Q(t)$ comme suit :

. sur la voie I d'un émetteur traditionnel :

$$S_I(t) = \cos\left(2\pi f_I \frac{t^2}{T_B}\right)$$

où t est la variable temps qui varie entre le temps t = 0 qui correspond au début de ce burst FFCHd et le temps t = $T_B$ qui correspond à la fin de ce burst, et où 2 $f_I$ est la fréquence instantanée en fin de ce même burst et sur cette voie I;

. Sur la voie Q de l'émetteur précité :

$$S_Q(t) = \sin\left(2\pi f_Q \frac{t^2}{T_B}\right)$$

où $2f_Q$ est la fréquence instantanée en fin de burst et sur cette voie Q.

On note alors bien que la fréquence instantanée, qui est comme on le sait proportionnelle à la dérivée du terme de phase, c'est-à-dire du terme :

$$2\pi f_I \frac{t^2}{T_B} \quad \text{pour la voie I}$$

et

$$2\pi f_Q \frac{t^2}{t_B} \quad \text{pour la voie Q}$$

varie alors linéairement avec le temps t en ayant une même valeur pour t=0 (début du burst) et des valeurs différentes ($2f_I$ et $2f_Q$ respectivement) en fin de burst (t = $T_B$).

Graphiquement parlant, la variation avec le temps, et pendant la durée du burst FCCHd, de la fréquence instantanée fi est représentée, sur le graphique de la Figure 5 pris dans le cas général, par le segment de droite 6 pour la voie I de l'émetteur précité et par le segment de droite 7 pour la voie Q.

En revanche, les fréquences instantanées des signaux associés aux voies I et Q du récepteur et obtenues après démodulation d'un burst FCCHd reçu à un instant donné sont affectées du déplacement Doppler d, comme représenté

respectivement par les courbes 8 et 9 sur la Figure 6.

Les courbes selon Figure 5 et Figure 6 correspondent au cas le plus général, qu'il convient bien sûr d'expliquer ici.

En réalité, selon une caractéristique pratique et intéressante de l'invention, l'un des deux coefficients directeurs respectivement associés aux deux droites de variation de la fréquence instantanée peut être, pendant toute la durée du burst FCCHd, choisi égal à zéro.

Cette disposition permet de simplifier l'installation, et elle sera détaillée ci-après, après la description d'une forme néanmoins avantageuse du traitement du cas général correspondant aux Figures 5 et 6, et qui sera faite dans l'immédiat.

La figure 7 schématise la constitution temporelle de la multitrame de signalisation émise par la station de base sur le "time slot" TN 0 de la fréquence porteuse BCH.

Une telle multitrame est typiquement composée de 51 trames de 8 bursts. L'incorporation des canaux logiques FCCHd et SCH est effectuée de la façon suivante :

- le burst FCCHd précède toujours le burst SCH et ils sont séparés par 8 bursts consécutifs, soit une trame,
- le burst FCCHd est séparé du burst FCCHd suivant par 80 bursts consécutifs, soit 10 trames,
- le burst SCH est également séparé du burst SCH suivant par 80 bursts consécutifs, soit 10 trames.

Chacun de ces deux canaux logiques utilise donc 5 bursts dans la multitrame.

Typiquement, chaque burst a une durée de 0,577 millisecondes, de sorte qu'une multitrame complète a une durée de 235,365 millisecondes.

La première opération que doit faire le terminal pour accèder au réseau via le satellite, est de procéder, sur la porteuse BCH qu'il a sélectionnée, à l'acquisition d'un burst FCCHd. La recherche d'un tel burst FCCHd lui permet d'ailleurs de s'assurer qu'il est bien, sur la fréquence porteuse sélectionnée, en présence d'une porteuse BCH.

La première opération que le terminal mobile va effectuer après qu'il ait sélectionné une porteuse qu'il pense être une porteuse BCH, est de tester, parmi les 80 premiers bursts véhiculés par cette porteuse, la présence d'un burst FCCHd, repéré 10 sur la Figure 7.

Nous verrons ci-dessous comment peut être détectée la présence d'un tel burst parmi les autres, mais de toute façon chaque investigation est réalisée par l'acquisiton, sur les deux voies en quadrature I et Q, d'un certain nombre suffisant N d'échantillons, par exemple une trentaine d'échantillons dans un certain cas de figure, pour fixer les idées.

Cette acquisition des N échantillons nécessaires au traitement est effectuée pendant un temps $t_A$ (Figure 7). Sur la figure 7, l'acquisition d'un burst, supposé ici être effectivement le burst FCCHd recherché 10, est figurée par des hâchures.

Cependant, même si cette acquisition est effectuée, comme en figure 7, sur le burst FCCHd 10, il est bien évident qu'elle est commandée à un instant qui est à priori quelconque par rapport au début réel 0 (Figure 6) du burst FCCHd. Or le terminal doit pouvoir se synchroniser avec précision sur le début 0 de ce burst FCCHd pour pouvoir accéder au réseau.

Il faut donc, pour pouvoir obtenir cette synchronisation, déterminer avec précision l'intervalle de temps $\tau$ qui sépare le début de l'acquisition des N échantillons du début réel 0 du burst FCCHd.

Conformément à l'invention, cet intervalle de temps $\tau$ est déterminé, par un simple calcul de triangles semblables aboutissant à une règle de trois, de la façon suivante (voir figure 6) :

Si l'on considère la Figure 6 d'un point de vue de pure géométrie plane, on constate la relation géométrique simple :

$$\frac{0\tau}{0T_B} = \frac{AB}{CD}$$

Or, le segment $0T_B$ a une valeur connue, qui correspond à la durée $T_B$ du burst. Il en est de même du segment CD, dont la valeur correspond à la différence des fréquences instantanées (connues) en fin de burst, respectivement $2f_I$ et $2f_Q$. Le segment AB est la différence des fréquences instantanées $2f_A$ et $2f_B$ sur les voies I et Q dudit récepteur à l'instant de début d'acquisition des N échantillons : cette différence est aisément déterminable par analyse spectrale.

La valeur du segment $0\tau$ que l'on recherche, se calcule alors simplement par la formule :

$$0\tau = 0T_B \cdot \frac{AB}{CD}$$

ou autrement dit par la règle de trois :

$$\tau = T_B \cdot \frac{2f_A - 2f_B}{2f_I - 2f_Q} = T_B \cdot \frac{f_A - f_B}{f_I - f_Q}$$

Finalement, l'architecture synoptique et logicielle qui permet de réaliser toute cette série d'opérations qui correspond à l'acquisition du burst BDHd 10 et à la synchronisation du terminal sur ce burst, est l'architecture dessinée en Figure 8, et qui sera expliquée maintenant plus en détails.

En se référant à cette figure 8, le signal analogique respectivement reçu, en bande de base, sur les deux voies en quadrature I et Q est, s'il s'agit d'un burst FCCHd, le suivant:

$$\text{sur la voie I : } s_I(t) = \cos\left(2\pi f_I \frac{t^2}{T_B} + 2\pi dt + \varphi\right)$$

$$\text{sur la voie Q : } S_Q(t) = \sin\left(2\pi f_Q \frac{t^2}{T_B} + 2\pi dt + \varphi\right)$$

où d est la valeur précitée du déplacement Doppler et où φ est le terme de déphasage.

Ces deux signaux $s_I(t)$ et $s_Q(t)$ sont chacun appliqués à un filtre passe-bas analogique respectif, 13 et 14, dont la fréquence de coupure fc est égale à la bande passante de fonctionnement, soit 90 kilohertz dans cet exemple.

Ces filtres 13 et 14 ont classiquement pour but de s'affranchir des produits d'intermodulation parasites.

Les signaux filtrés en sorties 15 et 16 des filtres analogiques 13 et 14 sont appliqués, pour être numérisés, à des convertisseurs analogique/numérique respectifs 17 et 18, qui sont synchronisés à la fréquence d'échantillonnage par un signal d'horloge H en provenance d'un bloc 19 qui est intégré à l'organe logique central du terminal.

Deux bus, par exemple de format 8-bits, respectivement 20 et 21, relient ces convertisseurs analogique/numérique 17 et 18 à deux mémoires-tampon respectives 22 et 23, qui sont synchronisées elles aussi par le signal d'horloge H.

Chaque séquence de calcul comprend, sous commande du bloc 19, l'acquisition de N échantillons successifs de chacun des signaux numérisés $S_I(t)$ et $S_Q(t)$. Cete acquisition est schématisée, sur la Figure 7, par la partie hachurée du burst FCCHd 10.

Les échantillons successifs qui sont acquis par les mémoires-tampon, ou "buffers", 22 et 23, sont mélangés un à un dans un mélangeur, ou multiplicateur, numérique 24.

Le signal numérique qui résulte de cette multiplication est alors le suivant, aux facteurs de proportionnalité précités près :

$$s_I(t).s_Q(t) =$$
$$\cos\left(2\pi f_I \frac{t^2}{T_B} + 2\pi dt + \varphi\right) . \sin\left(2\pi f_Q \frac{t^2}{T_B} + 2\pi dt + \varphi\right)$$

soit, en développant :

$$s_I(t).s_Q(t) =$$
$$\frac{1}{2}\left[\sin\left(4\pi dt + 2\pi \left(f_I + f_Q\right)\frac{t^2}{T_B} + 2\varphi\right) - \sin\left(2\pi \left(f_I - f_Q\right)\frac{t^2}{T_B}\right)\right]$$

dans le cas où il s'agit d'un burst FCCHd, ce que l'on ne sait pas encore à ce stade.

Ce signal $s_I(t).s_Q(t)$ est alors stocké dans une autre mémoire-tampon 25.

Si maintenant il ne s'agit pas d'un burst FCCHd, mais d'un autre burst tel que les bursts 11 ou 12, ou un burst d'une porteuse qui, bien que choisie, n'est pas la porteuse BCH recherchée, le signal analogique reçu est, à un facteur de proportionalité près :

$$\text{sur la voie I : } s_I(t) = \cos[\Phi(t) + 2\pi dt + \varphi]$$

$$\text{sur la voie Q : } s_Q(t)=\sin [\Phi(t)+ 2\pi dt + \varphi]$$

où $\Phi$ (t) est le signal d'information véhiculé par ce burst :

Le produit $s_I(t).s_Q(t)$, qui est effectué par le multiplicateur numérique 24 et qui est stocké, échantillon par échantillon, dans la mémoire-tampon 25, est alors égal à :

$$s_I(t).s_Q(t) = \sin(4\pi\ dt + 2\Phi(t) + 2\ \varphi)$$

Conformément à l'invention, les divers échantillons du produit $s_I(t).s_Q(t)$ qui sont stockés dans cette mémoire-tampon, sont appliqués à un filtre passe-bas numérique 26, dont la fréquence de coupure fc est égale à celle de la bande passante du système précité, soit 90 kilohertz dans l'exemple choisi.

Le signal filtré résultant est, échantillon par échantillon, stocké dans une autre mémoire-tampon 27, pour être finalement soumis, dans le bloc 28, à une analyse spectrale apte à déterminer, dans ce signal stocké, la présence ou l'absence d'une raie de fréquence correspondant à une sinusoïde pure présente dans l'intervalle de fréquence correspondant à la bande de base (ici 0 à 90 KHz).

Dans le cas, qui vient juste d'être évoqué ci-desssus, où en fait le burst sélectionné n'est pas un burst FCCHd, le produit précité obtenu :

$$\sin[4\pi\ dt + 2\Phi(t) + 2\ \varphi]$$

correspond à une composante de fréquence supérieure à la fréquence maximale, soit 90 KHz, de la bande de base. Cette composante "haute-fréquence" est éliminée par le filtre passe-bas 26, de sorte que l'analyse spectrale 28 ne révèle aucune raie de fréquence, mais seulement du bruit.

Commer montré symboliquement par le losange 29, la réponse à la question :

"est-on en présence d'un burst FCCHd ?"

est négative et il est appliqué au bloc de calcul 19 une information correspondante 30 qui déclenche en conséquence l'acquisition du burst de numéro d'ordre suivant.

Si après quatre-vingts investigations successives de ce type, pour lesquelles tous les bursts d'une multitrame ont été traités, la réponse en 29 est toujours négative, c'est que la fréquence porteuse sélectionnée n'est pas la fréquence porteuse BCH de la station de base, et le terminal sélectionne en conséquence une autre porteuse, afin d'y rechercher à nouveau la présence d'un burst FCCHd.

Si en revanche le burst sélectionné est, conformément à la Figure 7, bien un burst FCCHd, la composante de plus haute fréquence de la formule, donnée précédemment, qui résulte d'un calcul du produit $s_I(t).s_Q(t)$, est éliminée par le filtre passe-bas 26, de sorte que n'est stocké dans la mémoire-tampon 27 que le terme suivant :

$$s_I(t).s_Q(t) = -\ \frac{1}{2} \sin \left(2\pi \left(f_I - f_Q\right) \frac{t^2}{T_B}\right)$$

toujours à un facteur de proportionnalité près.

La fréquence instantanée fi d'un tel signal est représentée par la dérivée du terme :

$$\left(f_I - f_Q\right)\frac{t^2}{T_B}$$

et est donc égale à :

$$fi = 2\left(f_I - f_Q\right)\frac{t}{T_B}$$

L'analyse spectrale fine effectuée par l'analyseur 28 révèle alors nécessairement la présence d'une raie de fréquence correspondant à une sinusoïde pure de fréquence fi, et la réponse à la question posée par le losange 29 est alors positive : il s'agit bien d'un burst FCCHd.

Il est alors appliqué, par la liaison 31, une information de commande à un bloc 32 de calcul du temps $\tau$ précité, qui sépare donc l'instant d'acquisition du premier échantillon du début de ce burst FCCHd, ce calcul étant bien-entendu effectué par la règle de trois précitée.

Ce temps $\tau$ étant ainsi déterminé, le bloc 32 adresse, par une liaison 33, cette information au bloc de synchronisation 34 qui réalise alors en conséquence la synchronisation nécessaire du terminal sur le début du burst FCCHd 10. Le terminal est alors, à ce stade, synchronisé temporellement, c'est-à-dire qu'il sait se positionner au début de chaque burst.

Ce qui vient jusqu'à présent d'être décrit en référence aux Figures 7 et 8 est valable aussi bien dans le cas général qui correspond à la Figure 6 que dans le cas particulier, assez avantageux, où un des deux coefficients directeurs d'une des deux droites de variation de la fréquence instantanée du signal émis est nul et le point de départ des deux lois de variation est l'origine des axes du schéma de la figure 6.

La seconde étape de fonctionnement du terminal consiste alors à déterminer la valeur du déplacement Doppler d.

Cette seconde étape sera explicitée en référence à la Figure 9 dans le cas général précité de la Figure 6, et en référence à la Figure 10 dans le cas particulier précité où l'un des deux coefficients directeurs respectivement associés aux deux droites de variation de la fréquence instantanée fi est choisi égal à zéro.

Le moyen utilisé consiste alors, en procédant sur une seule voie en quadrature, par exemple la voie I selon Figure 9 :

. A procéder, après avoir comme précédemment filtré (filtre passe-bas 13 précédemment décrit) puis numérisé (convertisseur analogique/numérique 17 précédemment décrit) le signal analogique :

$$s_I(t) = \cos\left(2\pi f_I \frac{t^2}{T_B} + 2\pi dt + \varphi\right)$$

à l'acquisition échantillonnée du burst FCCHd complet.

Par exemple, on procède ainsi à l'acquisition de M=156 échantillons de ce burst complet.

Le stockage de ces M échantillons est réalisé dans la mémoire-tampon 22 qui a été précédemment décrite (voir figure 8).

. A séparer en deux voies 36 et 37 chacun de ces M échantillons, prélevés successivement dans la mémoire-tampon 22.

. A déphaser, dans le déphaseur 35, de + 90 degrés le signal présent sur la voie 37.

. A multiplier, sur la voie 36 qui n'est pas déphasée de + 90 degrés, dans un premier multiplicateur 38, le signal présent sur cette voie par un autre signal 39, qui est synthétisé, numérisé, et échantillonné par l'unité centrale du terminal et qui est égal, à un facteur de proportionnalité près, à :

$$\cos\left(2\pi f_I \frac{t^2}{T_B}\right)$$

et qui correspond à une composante du signal FCCHd tel qu'il est émis par la station terrestre de base.

. A multiplier, sur l'autre voie 37, et dans un second multiplicateur 40, le signal 62 qui est déphasé de + 90 degrés par le déphaseur 35 par un signal 63 qui est obtenu après avoir déphasé, dans un autre déphaseur 64, de + 90 degrés le signal 39 précité.

Concrètement parlant, le signal présent à la sortie 62 du déphaseur 35 est de la forme :

$$- \sin\left(2\pi f_I \frac{t^2}{T_B} + 2\pi dt + \varphi\right),$$

tandis que le signal présent en sortie 63 du déphaseur 64 est de la forme :

$$- \sin\left(2\pi \frac{t^2}{T_B} f_I\right)$$

les facteurs de proportionnalité n'étant toujours pas écrits ici, de même que dans tout ce qui va suivre.

Il en résulte qu'après les multiplications respectives dans les multiplicateurs 38 et 40, le signal présent sur la sortie du multiplicateur 38 est de forme :

$$\cos\left(2\pi f_I \frac{t^2}{T_B} + 2\pi dt + \varphi\right) . \cos\left(2\pi f_I \frac{t^2}{T_B}\right),$$

tandis que le signal présent sur la sortie 66 du multiplicateur 60 est de la forme :

$$\sin\left(2\pi f_I \frac{t^2}{T_B} + 2\pi dt + \varphi\right) . \sin\left(2\pi f_I \frac{t^2}{T_B}\right).$$

La suite du traitement consiste alors :

. A additionner, dans un sommateur numérique 67, les deux signaux juste précités qui sont présents sur les bus 65 et 66.
Après développement et simplification, on constate avec bonheur que le signal obtenu sur la sortie 68 de ce sommateur 67 est tout simplement de la forme :

$$\cos (2\pi\, dt + \varphi).$$

. A finalement procéder, dans un analyseur 69 semblable à l'analyseur 38 de Figure 5, par exemple un analyseur à Transformée de Fourier Rapide ou "FFT", à l'analyse spectrale du signal ainsi obtenu sur le bus 68, cette analyse spectrale étant réalisée assez finement pour éliminer le bruit blanc gaussien additif.
On en extrait ainsi la valeur absolue recherchée du déplacement Doppler d.

Dans ce qui précède, il est bien entendu admis que le déplacement Doppler d ne varie en pratique pas de façon à influencer les résultats du traitement ci-dessus pendant toute la durée du burst FCCHd considéré.

Si maintenant on procède selon le cas particulier, lui aussi intéressant pour sa relative simplicité, où le burst FCCHd 10 est créé, par la station de base, de manière à ce que la courbe 7 de la Figure 5 soit un segment de droite horizontal et confondu avec l'axe des temps Ot, la fréquence instantanée fi soit constante et égale à zéro pendant toute la durée du burst FCCHd tel qu'il est synthétisé par la station de base, la détermination du déplacement Doppler d est, selon Figure 10, assez simplifiée.

Le signal reçu en bande de base sur la voie Q dudit récepteur est alors de la forme :

$$s_Q(t)= \sin (2\ \pi\ dt + \varphi).$$

Comme en Figure 9, on procède, sur la voie Q, à l'acquisition, dans la mémoire-tampon 23 déjà décrite en Figure 8, de M échantillons d'un burst FCCHd complet. On utilise pour ceci le filtre passe-bas 14 et le convertisseur analogique/numérique 18 qui ont déjà été décrits en référence à la figure 8.

Le déplacement Doppler d est alors tout simplement déterminé par l'analyse spectrale du signal mémorisé. On utilise pour ceci par exemple l'analyseur 69 de la Figure 9.

L'étape suivante va maintenant consister à déterminer le signe de ce déplacement Doppler D.

Ce signe est obtenu en déterminant, comme expliqué ci-dessus en référence aux Figures 9 ou 10, la valeur absolue de deux déplacements Doppler successifs dl puis d2, qui sont séparés l'un de l'autre d'un intervalle de temps de une à quelques secondes, suffisant donc pour que le déplacement Doppler ait eu le temps de varier de manière significative.

Selon Figure 11 les valeurs absolues numérisées ld2l et ld1l de ces deux déplacements Doppler sont stockées dans une mémoire-tampon 41, puis comparées dans un comparateur numérique 42.

Si le résultat de cette comparaison indique que ld2l est supérieure à ld1l, c'est que le satellite s'éloigne du terminal, et que par conséquent le signe du déplacement Doppler est négatif.

Si en revanche cette comparaison indique que ld2l est inférieure à ld1l, c'est que le satellite se rapproche du terminal, et en conséquence que le signe du déplacement Doppler est positif.

Si, ce qui est forcément extrèmement rare, cette comparaison indique que ld2l est pratiquement égale à ld1l, c'est que le satellite vient juste de passer au zénith et va donc commencer à s'éloigner du terminal : le signe à prendre en compte pour le déplacement Doppler d est donc alors en fait le signe négatif.

Enfin, la dernière étape va maintenant consister à compenser, pour le signal reçu par le terminal, le déplacement Doppler d, pour somme-toute permettre à ce terminal de fonctionner.

A noter que ce déplacement Doppler d doit nécessairement être compensé pendant toute la durée d'utilisation du satellite pour la conversation téléphonique en cours. Compte-tenu du temps de défilement d'un tel satellite, cette durée est de l'ordre d'une dizaine de minutes.

Puis le satellite ayant disparu à l'horizon, il est prévu de le relayer par un autre, et ainsi de suite.

Il est donc nécessaire de prévoir, afin de pouvoir le corriger en permanence et non pas seulement à un instant donné, de suivre ce déplacement Doppler pendant toute la durée de passage et d'utilisation effective du satellite.

Une première approche, qui est en fait intellectuellement la plus simple à concevoir mais qui est en pratique la plus lourde à réaliser, consiste pour le terminal à effectuer des mesures du déplacement Doppler à intervalles de temps quasi-réguliers, par exemple toutes les dix secondes environ.

Lors de chaque mesure, le terminal corrige d'une part la fréquence de l'Oscillateur Local du Démodulateur en fonction du déplacement Doppler mesuré et, d'autre part, il ajuste l'intervalle de temps séparant deux mesures consécutives relativement à l'importance de la variation de fréquence alors ainsi mesurée, entre ces deux mesures consécutives.

Le schéma très général de la compensation, ou correction, du déplacement Doppler d est donnée en traits pleins sur la Figure 12.

On reconnaît sur cette Figure 12 le classique schéma de la démodulation de phase en quadrature du signal analogique reçu par le terminal.

Le signal analogique non démodulé qui est présent sur la ligne réceptrice se divise classiquement en deux voies : la voie I sur la ligne 44, et la voie Q sur la ligne 45,

Le signal de la voie I est appliqué à un premier mélangeur analogique 46 qui reçoit sur son autre entrée 47 le signal à fréquence fixe qui lui est fourni par l'Oscillateur Local 48.

Cependant, cet Oscillateur Local n'est pas un oscillateur classique de fréquence propre fo immuable, mais est un V.C.O (oscillateur commandé en tension) qui reçoit sur son entrée de commande une tension représentative du déplacement Doppler d, déterminé par le terminal comme décrit ci-dessus.

La fréquence de l'Oscillateur Local 48 n'est alors donc pas sa fréquence propre fo qu'il aurait en l'absence de correction du déplacement Doppler, mais la somme algébrique (fo+d) de cette fréquence fo et du déplacement Doppler d.

Le signal démodulé sur la voie I, en sortie 50 du mélangeur 46 est donc bien un signal démodulé et pour lequel

le déplacement Doppler est compensé.

De même, et de manière en soi très classique, ce signal de fréquence (fo+d) élaboré par l'Oscillateur Local 48 est appliqué, via un classique déphaseur de 90 degrés référencé 51, à un autre mélangeur 52 qui reçoit aussi le signal de la voie Q et dont la sortie 53 porte alors le signal démodulé sur la voie Q.

Selon la première approche précitée, le signal présent sur l'entrée de commande 49 de l'Oscillateur Local 48 est donc élaboré directement à partir de la valeur du déplacement Doppler d mesuré lors de la correction.

Cette solution est néanmoins assez lourde, car elle oblige à réaliser le calcul du déplacement Doppler un nombre de fois assez considérable.

On lui préférera donc en général une seconde solution qui consiste (Voir en traits mixtes sur la Figure 12) à prévoir, pour l'élaboration de la correction Doppler d à appliquer sur l'entrée de commande 49 de l'Oscillateur Local 48, une correction en temps réel ou moyen d'un dispositif logique 54 de suivi automatique du déplacement Doppler d en fonction du déplacement, connu, du satellite considéré, et d'un nombre limité de mesures du déplacement Doppler réalisées comme décrit précédemment et entrées dans le dispositif logique 54 sur une porte d'entrée 55 de ce dernier.

La constitution et le fonctionnement du bloc logique 54 de suivi automatique du déplacement Doppler seront maintenant expliqués en référence à la Figure 13.

Pour un terminal mobile donné, la variation temporelle de la valeur du déplacement Doppler dépend de sa position relative par rapport à la trajectoire suivie par le satellite. Cette dernière, vue du terminal, est alors caractérisée par un paramètre appelé élévation maximale et désignant l'ouverture maximale de l'angle formé au cours du temps par les droites terminal-horizon et terminal-satellite. Concrètement, l'élévation maximale varie entre 20 et 90 degrés.

Il est prévu , dans une mémoire "ROM" 56 (mémoire non volatile) du terminal, une table 57 contenant les variations temporelles connues du déplacement Doppler d pour différentes élévations maximales de chaque satellite. En d'autres termes, le terminal possède, dans cette mémoire non-volatile 56 et pour chaque trajectoire particulière de chaque satellite (donc pour une élévation maximale donnée), la courbe de variation du déplacement Doppler associée.

Pour fixer les idées par un exemple numérique, 70 courbes sont ainsi mémorisées, la résolution pour l'élévation maximale étant prise égale à un degré.

Lors de la mise sous tension, le terminal (bloc 58 comportant une mémoire RAM, ou mémoire volatile, 59) effectue et mémorise une série de N mesures du déplacement Doppler : d(1), d(2), ..., d(N). Le nombre N est par exemple de l'ordre de quelques dizaines.

Ces mesures sont comparées, dans un bloc logique 60, aux données pré-enregistrées dans la mémoire ROM 56.

Il est ainsi déterminé, si les mesures effectuées le permettent, quelle est la courbe de variation du déplacement Doppler qui doit présentement être prise en compte.

Il est alors en conséquence prévu un autre bloc de calcul 61, qui a un rôle de prédiction et de fourniture de la tension de correction du déplacement Doppler d au niveau de l'oscillateur Local précité (voir la liaison 49, à comparer avec la Figure 12).

Dans le cas où les mesures initiales d(1) à d(N) précitées ne permettent pas au bloc logique 60 de déterminer quelle est la courbe préenregistrée qu'il convient de prendre en compte, le terminal effectue alors, par le bloc logique 58, une série de mesures complémentaires.

Comme il va de soi, l'invention n'est pas limitée à l'exemple de réalisation qui vient d'être décrit. Elle est bien au contraire susceptible d'être mise en oeuvre sous de multiples autres formes équivalentes.

## Revendications

1. Système de communication comportant des moyens de réception de signaux de communication transmis sur une pluralité de canaux de transmission, caractérisé en ce que lesdits moyens de réception comportent un dispositif de synchronisation sur une porteuse associée à l'un desdits canaux de transmission,
   à partir d'un unique paquet de signalisation de durée T véhiculé par ladite porteuse et émis périodiquement avec une période de répétition $T_r$, ledit paquet de signalisation comportant un signal de référence modulé en fréquence selon une loi de modulation qui varie la fréquence linéairement ou non linéairement en fonction du temps dans ce paquet, permettant ainsi une synchronisation fréquentielle et temporelle.

2. Système de communication selon la revendication 1, caractérisé en ce que lesdits moyens de réception comportent un dispositif de synchronisation sur une porteuse associée à l'un desdits canaux de transmission, un dispositif d'estimation du décalage Doppler de ladite porteuse et un dispositif d'estimation du canal de transmission à partir dudit unique paquet de signalisation.

3. Système de communication selon la revendication 1 ou 2 caractérisé en ce que ladite loi de modulation est une fonction (f) linéaire du temps.

**4.** Système de communication selon la revendication 3, caractérisé en ce que, ladite loi de modulation étant appliquée sur deux voies en quadrature (I, Q), deux fonctions distinctes sont utilisées sur chacune des voies.

**5.** Système de communication selon l'une quelconque des revendications 1 à 3, caractérisé en ce que ledit dispositif d'estimation du décalage Doppler comprend :

- un oscillateur local (VCO),
- un mélangeur (M) recevant ladite porteuse et le signal de sortie dudit oscillateur local (VCO),
- un filtre (BP) recevant le signal de sortie dudit mélangeur (M) pour produire un signal à fréquence intermédiaire (IF),
- un circuit d'analyse (MF1, MF2, MF3, CORR) recevant ledit signal à fréquence intermédiaire (IF) pour produire un signal de déplacement (SH) représentant l'écart de fréquence dû à l'effet Doppler entre une fréquence théorique (ft) et la fréquence dudit signal à fréquence intermédiaire (IF),
- un circuit de commande (CC) commandant ledit oscillateur local (VCO) pour établir une estimation dudit décalage Doppler à partir dudit signal de déplacement (SH).

**6.** Système de communication selon la revendication 5, caractérisé en ce que ledit circuit de commande (CC) commande de plus ledit oscillateur local (VCO) pour réduire ledit écart de fréquence.

**7.** Système de communication selon la revendication 5 ou 6, caractérisé en ce que ledit circuit d'analyse comprend au moins un premier filtre adapté (MF1) audit signal de référence et centré sur ladite fréquence théorique ($f_T$), un circuit de correction (CORR) pour produire un premier facteur de forme ($W_1$) du signal de sortie de ce filtre, et en ce que le circuit de commande (CC), agit sur ledit oscillateur local pour maximiser ledit premier facteur de forme ($W_1$).

**8.** Système de communication selon la revendication 7, caractérisé en ce que ledit circuit de commande (CC) commande ledit oscillateur local (VCO) par approximations successives en appliquant une correction de fréquence de part et d'autre de la fréquence qui produit le plus grand facteur de forme ($W_1$) afin de rechercher à nouveau le facteur de forme le plus élevé, les recherches successives s'effectuant en diminuant la valeur de ladite correction de fréquence jusqu'à un seuil de correction prédéterminé.

**9.** Système de communication selon la revendication 7 caractérisé en ce que, une amplitude de décalage ($\Delta$f) valant sensiblement le maximum du décalage Doppler dudit signal à fréquence intermédiaire (IF), le dispositif d'estimation comprend de plus un deuxième (MF2) et un troisième (MF3) filtre adapté audit signal de référence et centré sur ladite fréquence théorique (fT) diminuée respectivement augmentée de ladite amplitude de décalage ($\Delta$f), ledit circuit de correction établissant outre ledit premier facteur de forme ($W_1$) un deuxième ($W_2$) et un troisième ($W_3$) facteur de forme du signal de sortie dudit deuxième (MF2) respectivement dudit troisième (MF3) filtre adapté, et produisant ledit signal de déplacement (SH) proportionnel à l'opposé du barycentre des fréquences centrales desdits filtres adaptés (MF1, MF2, MF3) pondérées par lesdits facteurs de forme correspondant ($W_1$, $W_2$; $W_3$).

**10.** Système de communication selon la revendication 9, caractérisé en ce que ledit circuit de commande (CC) commande ledit oscillateur local (VCO) de sorte que ledit signal à fréquence intermédiaire (IF) ait une fréquence augmentée dudit signal de déplacement.

**11.** Système de communication selon l'une quelconque des revendications 1 à 3, caractérisé en ce que ledit dipositif de synchronisation comprend :

- un oscillateur local (VCO),
- un mélangeur (M) recevant ladite porteuse et le signal de sortie dudit oscillateur local (VCO),
- un filtre (BP) recevant le signal de sortie dudit mélangeur (M) pour produire un signal à fréquence intermédiaire (IF),
- un circuit d'analyse (MF1, MF2, MF3, CORR) recevant ledit signal à fréquence intermédiaire pour produire d'une part un signal de changement de fréquence (CF) si ledit signal de référence n'est pas détecté et d'autre part un signal de déplacement de fréquence (SH) représentant l'écart entre une fréquence théorique (fT) et la fréquence dudit signal à fréquence intermédiaire (IF),
- un circuit de commande (CC) commandant ledit oscillateur local (VCO) pour qu'il s'accorde sur ladite porteuse puis, à la suite d'une période de mesure ayant une durée prédéterminée supérieure ou égale à T + Tr, pour qu'il s'accorde sur une autre porteuse en présence dudit signal de changement de fréquence (CF) ou bien

pour réduire la valeur dudit signal de déplacement de fréquence (SH) en l'absence dudit signal de changement de fréquence (CH).

**12.** Système de communication selon la revendication 11, caractérisé en ce que ledit circuit d'analyse comprend au moins un premier filtre adapté (MF1) audit signal de référence et centré sur ladite fréquence théorique ($f_T$), un circuit de correction (CORR) pour produire un premier facteur de forme ($W_1$) du signal de sortie de ce filtre, et en ce que le circuit de commande (CC), agit sur ledit oscillateur local pour maximiser ledit premier facteur de forme ($W_1$).

**13.** Système de communication selon la revendication 12, caractérisé en ce que ledit circuit de commande (CC) commande ledit oscillateur local (VCO) par approximations successives en appliquant une correction de fréquence de part et d'autre de la fréquence qui produit le plus grand facteur de forme ($W_1$) afin de rechercher à nouveau le facteur de forme le plus élevé, les recherches successives s'effectuant en diminuant la valeur de ladite correction de fréquence jusqu'à un seuil de correction prédéterminé.

**14.** Système de communication selon l'une quelconque des revendications 1 à 3, caractérisé en ce que le dispositif de synchronisation comprend :

- un oscillateur local (VCO),
- un mélangeur (M) recevant ladite porteuse et le signal de sortie dudit oscillateur local (VCO),
- un filtre (BP) recevant le signal de sortie dudit mélangeur (M) pour produire un signal à fréquence intermédiaire (IF),
- un circuit d'analyse (MF1, MF2, MF3, CORR) recevant ledit signal à fréquence intermédiaire pour produire un signal de déplacement de fréquence (SH) représentant l'intervalle de temps séparant la réception de deux paquets de signalisation successifs,
- un circuit de commande (CC) commandant ledit oscillateur local (VCO) pour réduire l'écart entre ledit signal de déplacement de fréquence (SH) et ladite période de répétition $T_r$.

**15.** Système de communication selon l'une quelconque des revendications 1 à 3, caractérisé en ce que ledit dispositif d'estimation du canal de transmission comprecd :

- un oscillateur local (VCO),
- un mélangeur (M) recevant ladite porteuse et le signal de sortie dudit oscillateur local (VCO),
- un filtre (BP) recevant le signal de sortie dudit mélangeur (M) pour produire un signal à fréquence intermédiaire (IF),
- un circuit d'analyse recevant ledit signal à fréquence intermédiaire (IF) et le ramenant en bande de base pour produire un spectre dudit canal,
- un circuit de commande (CC) commandant ledit oscillateur local (VCO) pour établir une estimation dudit canal à partir dudit spectre de canal.

**16.** Système de communication selon la revendication 15 caractérisé en ce que, ledit signal de référence présentant une fréquence de pente constante ($-\mu$), ledit circuit de commande (CC) commande ledit oscillateur local (VCO) pour qu'il produise une fréquence dont la pente ($\mu$) est opposée à celle dudit signal de référence à compter de la réception de ce signal par le trajet t0 le plus court dudit canal, ledit spectre de canal présentant un ensemble de raies identifiées chacune par sa fréquence ri et son amplitude hi, une raie déterminée correspondant à un trajet ti et ayant une fréquence en rapport avec la longueur de ce trajet, ledit circuit de commande produisant ladite estimation en caratérisant chaque trajet ti par sa contribution qui est proportionnelle à l'amplitude de la raie correspondante hi et par son retard ti qui vaut $(ri - r0)/\mu$, ceci pour tout i compris entre 0 et n si l'on considère $(n + 1)$ trajets distincts.

**17.** Terminal d'une installation de radiotéléphonie apte à fonctionner dans un système de communication selon la revendication 4, caractérisé en ce qu'il comprend des moyens pour, à la réception d'un tel paquet autrement nommé burst FCCHd :

. procéder, sur les deux voies (I) et (Q) d'un récepteur en quadrature, à l'acquisition (17, 18) d'un nombre (N) d'échantillons suffisant pour effectuer le calcul qui va suivre, et au stockage (22, 23) de ces échantillons $s_I(t)$ et $s_Q(t)$, t étant la variable "temps";
. effectuer alors (24) et enregistrer (25) les divers produits $s_I(kT).s_Q(kT)$, kT désignant la variable "temps", représentation discrète ;

- procéder alors à un filtrage numérique passe-bas (26) afin d'éliminer, de chacun de ces produits ainsi obtenus, la composante de plus haute fréquence ;
- procéder ensuite à l'analyse spectrale (28) du signal filtré ainsi obtenu (27) afin de déterminer la différence ($f_t$) des fréquences instantanées sur ces deux voies en quadrature (I, Q) au moment de ladite acquisition ;
- connaissant la durée ($T_B$) dudit burst FCCHd (10) ainsi que les fréquences instantanées ($f_I$) et ($f_Q$) en fin de burst du signal émis, calculer (32) l'intervalle de temps (t) qui sépare le début réel de ce burst FCCHd du début de ladite acquisition par la formule :

$$\tau = T_B \cdot \frac{f_\tau}{2(f_I - f_Q)}$$

où $f_\tau$ est déterminée par analyse spectrale, et où $f_I$ est supposée supérieure à $f_Q$ ;

- synchroniser (34) alors le terminal sur le début, maintenant connu, de ce burst FCCHd.

**18.** Terminal selon la revendication 17, caractérisé en ce qu'il comprend des moyens pour :

- déterminer la valeur absolue du déplacement Doppler (d) en procédant à l'acquisition (22 figure 9, 23 Figure 10) d'un burst FCCHd complet sur une des deux voies du récepteur en quadrature au moyen d'un stockage d'échantillons, puis en traitant, si nécessaire (35 à 39, 63 à 68), ce signal, ainsi stocké et par ailleurs affecté dudit déplacement Doppler (d), afin de n'en conserver que le terme en cosinus, ou sinus, de ($2\pi dt$), additionné d'un terme de phase ($\varphi$), et enfin en procédant à l'analyse spectrale (69) du signal ainsi obtenu pour en déduire la valeur dudit déplacement Doppler (d) ;
- déterminer le signe de ce déplacement Doppler (d) en procédant de même façon au calcul de deux déplacements Doppler (d1) et (d2) à des intervalles successifs suffisamment longs, de l'ordre d'au moins une à plusieurs secondes par exemple, et en calculant (41, 42) la différence en valeur absolue Id2I-Id1I de ces deux déplacements afin d'en déduire le sens de variation du déplacement Doppler (d) et donc son signe.

**19.** Terminal selon la revendication 18 caractérisé en ce qu'il comprend des moyens pour compenser ce déplacement fréquentiel Doppler (d) en utilisant, pour la démodulation (46, 51, 52) du signal d'informations reçu (43, 44, 45) en provenance du satellite, un Oscillateur Local (48) dont la fréquence n'est pas la fréquence fixe (fo) habituelle pour une telle démodulation, mais est égale à cette fréquence (fo) affectée de la valeur de ce déplacement fréquentiel Doppler (d).

**20.** Terminal selon la revendication 19 caractérisé en ce que, afin de compenser le déplacement Doppler en temps réel pendant toute la durée du défilement du satellite, il est prévu, dans le terminal, pour l'élaboration de la correction Doppler (d) à appliquer sur l'entrée de commande (49) de l'oscillateur Local de démodulation (48), une correction en temps réel au moyen d'un dispositif logique (54) de suivi automatique du déplacement Doppler (d) en fonction du déplacement, connu, du satellite considéré, et d'un nombre limité de mesures du déplacement Doppler (d).

**21.** Terminal selon la revendication 20, caractérisé :

- en ce qu'il est prévu, dans ce bloc logique (54) de suivi en temps réel du déplacement Doppler (d), une mémoire (56) qui contient une table (57) des variations temporelles connues du déplacement Doppler pour différentes élevations maximales de chaque satellite ;
- en ce que le terminal effectue et mémorise, dans une mémoire volatile (58, 59) une série limitée de mesures du déplacement Doppler, et compare ces mesures, dans un bloc logique (60), aux données préenregistrées de ladite table (57), afin de déterminer ainsi quelle est la courbe de variation du déplacement Doppler qui doit présentement être prise en compte,
- et en ce qu'il est en conséquence prévu un autre bloc de calcul (61) qui a un rôle de prédiction et de fourniture (49) de la tension de correction du déplacement Doppler à l'Oscillateur Local de démodulation (48).

**22.** Utilisation d'une station de base d'une installation de radiotéléphonie, caractérisée en ce qu'elle émet un paquet de signalisation selon l'une quelconque des revendications 1 à 4.

**Patentansprüche**

1. Kommunikationssystem, das Mittel zum Empfang von Kommunikationssignalen umfaßt, die auf einer Vielzahl von Übertragungskanälen übertragen werden, dadurch gekennzeichnet, daß die Empfangsmittel eine Einrichtung zur Synchronisation auf einer mit einem der Übertragungskanäle verbundenen Trägerwelle umfaßt, um ein eindeutiges Signalisationspaket mit der Dauer T zu tragen, das vor der Trägerwelle befördert und mit einer Wiederholungsperiode $T_r$ periodisch ausgesandt wird, wobei das Signalisationspaket ein Referenzsignal umfaßt, das nach einem Modulationsgesetz frequenzmoduliert ist, das die Frequenz in Abhängigkeit von der Zeit in diesem Paket linear oder nichtlinear ändert, wobei so eine Frequenz-und zeitliche Synchronisation gestattet wird.

2. Kommunikationssystem nach Anspruch 1, dadurch gekennzeichnet, daß die Empfangsmittel eine Einrichtung zur Synchronisation auf einer mit einem der Übertragungskanäle verbundenen Trägerwelle, eine Einrichtung zur Schätzung der Doppler-Verschiebung der Trägerwelle und eine Einrichtung zur Schätzung des Übertragungskanals, ausgehend von dem eindeutigen Signalisationspaket, umfaßt.

3. Kommunikationssystem nach Anspruch 1 oder 2, dadurch gekennzeichnet, daß das Modulationsgesetz eine lineare Funktion (f) der Zeit ist.

4. Kommunikationssystem nach Anspruch 3, dadurch gekennzeichnet, daß wenn das Modulationsgesetz auf zwei um 90° phasenverschobenen Kanälen (I, Q) angewendet wird auf jedem der Kanäle zwei verschiedene Funktionen verwendet werden.

5. Kommunikationssystem nach einem der Anspruch 1 bis 3, dadurch gekennzeichnet, daß die Einrichtung zur Schätzung der Doppler-Verschiebung umfaßt:

   - einen Lokaloszillator (VCO),
   - einen Mischer (M), der die Trägerwelle und das Ausgangssignal des Lokaloszillators (VCO) empfängt,
   - einen Filter (BP), der das Ausgangssignal des Mischers (M) empfängt, um ein Zwischenfrequenzsignal (IF) zu erzeugen,
   - eine Analyseschaltung (MF1, MD2, MF3, CORR), die das Zwischenfrequenzsignal (IF) empfängt, um ein Verschiebungssignal (SH) zu erzeugen, das die Frequenzabweichung aufgrund des Dopplereffekts zwischen einer theoretischen Frequenz (ft) und der Frequenz des Zwischenfrequenzsignals (IF) darstellt,
   - eine Steuerschaltung (CC), die den Lokaloszillator (VCO) so steuert, daß ausgehend vom Verschiebungesignal (SH) eine Schätzung der Doppler-Verschiebung erstellt wird.

6. Kommunikationssystem nach Anspruch 5, dadurch gekennzeichnet, daß die Steuerschaltung (CC) außerdem den Lokaloszillator (VCO) so steuert, daß die Frequenzabweichung verringert wird.

7. Kommunikationssystem nach Anspruch 5 oder 6, dadurch gekennzeichnet, daß die Analyseschaltung wenigstens einen ersten Filter (MF1), der an das Referenzsignal angepaßt und auf die theoretische Frequenz ($f_T$) zentriert ist, eine Korrekturschaltung (CORR) zum Erzeugen eines ersten Formfaktors ($W_1$) des Ausgangssignals dieses Filters umfaßt, ud daß die Steuerschaltung (CC) auf den Lokaloszillator wirkt, um den ersten Formfaktor ($W_1$) zu maximieren.

8. Kommunikationssystem nach Anspruch 7, dadurch gekennzeichnet, daß die Steuerschaltung (CC) den Lokaloszillator (VCO) durch sukzessive Approximationen unter Anwendung einer Frequenzkorrektur beiderseits der Frequenz steuert, die den größten Formfaktor ($W_1$) erzeugt, um von neuem den höchsten Formfaktor zu suchen, wobei die sukzessiven Suchen unter Verringerung des Wertes der Frequenzkorrektur bis zu einer vorbestimmten Korrekturschwelle erfolgen.

9. Kommunikationssystem nach Anspruch 7, dadurch gekennzeichnet, daß wenn eine Verschiebungsamplitude ($\Delta f$) im wesentlichen den Wert des Maximums der Doppler-Verschiebung des Zwischenfrequenzsignals (IF) hat, die Schätzeinrichtung außerdem einen zweiten (MF2) und einen dritten (MF3) Filter umfaßt, der an das Referenzsignal angepaßt und auf die theoretische Frequenz (fT) zentriert ist, die um die Verschiebungsamplitude ($\Delta f$) verringert bzw. erhöht ist, wobei die Korrekturschaltung außer dem ersten Formfaktor ($W_1$) einen zweiten ($W_2$) und einen dritten ($W_3$) Formfaktor für das Ausgangssignal des zweiten (MF2) bzw. des dritten (MF3) angepaßten Filters erstellt, und wobei das Verschiebungssignal (SH) erzeugt wird, das zum negativen Schwerpunkt der Mittelfrequenzen der angepaßten Filter (MF1, MF2, MF3), gewichtet mit den enstsprechenden Formfaktoren (W1, W2, W3)

proportional ist.

**10.** Kommunikationssystem nach Anspruch 9, dadurch gekennzeichnet, daß die Steuerschaltung (CC) den Lokaloszillator (VCO) derart steuert, daß das Zwischenfrequenzsignal (IF) eine gegenüber dem Verschiebungssignal erhöhte Frequenz hat.

**11.** Kommunikationssystem nach einem der Ansprüche 1 bis 3, dadurch gekennzeichnet, daß die Synchronisationseinrichtung umfaßt:

- einen Lokaloszillator (VCO),
- einen Mischer (M), der die Trägerwelle und das Ausgangssignal des Lokaloszillators (VCO) empfängt,
- einen Filter (BP), der das Ausgangssignal des Mischers (M) empfängt, um ein Zwischenfrequenzsignal (IF) zu erzeugen,
- eine Analyseschaltung (MF1, MF2, MF3, CORR), die das Zwischenfrequenzsignal empfängt, um einerseits ein Frequenzänderungssignal (CF), wenn das Referenzsignal nicht erfaßt wurde, und anderseits ein Frequenzverschiebungssignal (SH) zu erzeugen, das die Abweichung zwischen einer theoretischen Frequenz (fT) und der Frequenz des Zwischenfrequenzsignals (IF) darstellt,
- eine Steuerschaltung (CC), die den Lokaloszillator (VCO) steuert, damit er auf die Trägerwelle abgestimmt wird, dann nach einer Meßperiode mit einer vorbestimmten Dauer, die höher oder gleich T + Tr ist, damit er in Gegenwart des Frequenzänderungssignals (CF) auf eine andere Trägerwelle abgestimmt wird, oder aber um bei Nichtvorhandensein des Frequenzänderungssignals (CF) den Wert des Frequenzverschiebungssignals (SH) zu verringern.

**12.** Kommunikationssystem nach Anspruch 11, dadurch gekennzeichnet, daß die Analyseschaltung wenigstens einem ersten Filter (MF1), der an das Referenzsignal angepaßt und auf die theoretische Frequenz ($f_T$) zentriert ist, eine Korrekturschaltung (CORR) zum Erzeugen eines erster Formfaktors ($W_1$) für das Ausgangssignal dieses Filters umfaßt, und daß die Steuerschaltung (CC) auf den Lokaloszillator wirkt, um den ersten Formfaktor ($W_1$) zu maximieren.

**13.** Kommunikationssystem nach Anspruch 12, dadurch gekennzeichnet, daß die Steuerschaltung (CC) den Lokaloszillator (VCO) durch sukzessive Approximationen unter Anwendung einer Frequenzkorrektur beiderseite der Freqenz steuert, die den größten Formfaktor ($W_1$) erzeugt, um von neuem den höchsten Formfaktor zu suchen, wobei die sukzessiven Suchen unter Verringerung des Wertes der Frequenzkorrektur bis zu einer vorbestimmten Korrekturschwelle erfolgt.

**14.** Kommunikationssystem nach einem des Ansprüche 1 bis 3, dadurch gekennzeichnet, daß die Synchronisationseinrichtung umfaßt:

- einen Lokaloszillator (VCO),
- einen Mischer (M), der die Trägerwelle und das Ausgangssignal des Lokaloszillators (VCO) empfängt,
- einen Filter (BP), der das Ausgangssignal des Mischers (M) empfängt, um ein Zwischenfrequenzsignal (IF) zu erzeugen,
- eine Analyseschaltung (MF1, MF2, MF3, CORR), die das Zwischenfrequenzsignal empfängt, um ein Frequenzverschiebungssignal (SH) zu erzeugen, das das Zeitintervall darstellt, das den Empfang von zwei aufeinanderfolgenden Signalisationspaketen trennt,
- eine Steuerschaltung (CC), die den Lokaloszillator (VCO) so steuert, daß die Abweichung zwischen dem Frequenzverschiebungssignal (SH) und der Wiederholungsperiode ($T_r$) verringert wird.

**15.** Kommunikationssystem nach einem der Ansprüche 1 bis 3, dadurch gekennzeichnet, daß die Einrichtung zur Schätzung des Übertragungskanals umfaßt:

- einen Lokaloszillator (VCO),
- einen Mischer (M), der die Trägerwelle und das Ausgangssignal des Lokaloszillators (VCO) empfängt,
- einen Filter (BP), der das Ausgangssignal des Mischers (M) empfängt, um ein Zwischenfrequenzsignal (IF) zu erzeugen,
- eine Analyseschaltung, die das Zwischenfrequenzsignal (IF) empfängt und in ein Basisfrequenzband bringt, um ein Spektrum des Kanals zu erzeugen,
- eine Steuerschaltung (CC), die den Lokaloszillator (VCO), so steuert, daß eine Schätzung des Kanals ausgehend vom Kanalspektrum erstellt wird.

**16.** Kommunikationssystem nach Anspruch 15, dadurch gekennzeichnet, daß das Referenzsignal eine Frequenz mit konstanter Steigung ($-\mu$) aufweist, die Steuerschaltung (CC) den Lokaloszillator (VCO) so steuert, daß er eine Frequenz erzeugt, deren Steigung ($\mu$) zu des Referenzsignals entgegengesetzt ist, die beim Empfang dieses Signals durch die kürzeste Strecke t0 des Kanals zu berechnen ist, wobei das Kanalspektrum eine Gesamtheit von Linien aufweist, die jeweils durch ihre Frequenz ri und ihre Amplitude hi identifiziert sind, eine bestimmte Linie einer Strecke ti entspricht und eine Frequenz analog zur Länge dieser Strecke hat, wobei die Steuerschaltung die Schätzung unter Kennzeichnung jeder Strecke ti durch ihren Beitrag, der proportional zur Amplitude der entsprechenden Linie hi ist, und durch seine Verzögerung ti erzeugt, die für alle i zwischen 0 und n der Wert $(ri - r0)/\mu$ hat, wenn (n + 1) verschiedene Strecken betrachtet werden.

**17.** Terminal einer Funktelefonanlage, die geeignet ist, in einem Kommunikationssystem nach Anspruch 4 zu arbeiten, dadurch gekennzeichnet, daß sie Mittel umfaßt, um bei Empfang eines solchen Pakets, sonst Burst FCCHd genannt:

. auf den beiden Kanälen (I) und (Q) eines um 90° phasenverschobenen Empfängers die Erfassung (17, 18) einer Anzahl (N) von Proben, die ausreicht, um die folgende Berechnung durchzuführen, und die Speicherung (22, 23) dieser Proben $s_I(t)$ und $s_Q(t)$ vorzunehmen, wobei t die Variable "Zeit" ist,

. dann die verschiedenen Produkte $s_I(kT)$, $s_Q(kT)$ auszuführen (24) und zu speichern (25), wobei kT die Variable "Zeit", diskrete Darstellung, bezeichnet,

. dann eine numerische Tiefpaßfilterung (26) vorzunehmen, um von jedem dieser so erhaltenen Produkte die Komponente mit der höchsten Frequenz zu eliminieren,

. danach die Spektralanalyse (28) des so erhaltenen, gefilterten Signals (27) vorzunehmen, um die Differenz ($f_t$) der Momentanfrequenzen auf diesen beiden um 90° phasenverschobenen Kanälen (I, Q) zum Zeitpunkt der Erfassung zu bestimmen,

. unter Kenntnis der Dauer ($T_B$) des Bursts FCCHd (10) sowie der Momentanfrequenzen ($f_T$) und ($f_Q$) am Burstende des ausgesandten Signals das Zeitintervall (t), das den wirklichen Beginn dieses Burst FCCHd vom Beginn der Erfassung trennt, durch die Formel:

$$\tau = T_B \cdot \frac{f_\tau}{2(f_I - f_Q)}$$

zu berechnen (32), in der $f_\tau$ durch Spektralanalyse ist und $f_I$ größer als $f_Q$ angenommen wird,

. dann das Terminal auf den jetzt bekannten Beginn dieses Bursts FCCHd zu synchronisieren (34).

**18.** Terminal nach Anspruch 17, dadurch gekennzeichnet, daß as Mittel umfaßt, um:

. unter Vornehmen der Erfassung (22, Fig. 9, 23, Fig. 10) eines vollständigen Bursts FCCHd auf einem der beiden Kanäle des um 90° phasenverschobenen Empfängers mittels einer Speicherung von Proben, dann unter Verarbeitung, falls nötig (35 bis 39, 63 bis 68) dieses so gespeicherten und außerdem von der Doppler-Verschiebung (d) beeinflußten Signals, um nur den mit einem Phasenterm ($\varphi$) addierte Cosinus- oder Sinusterm von ($2\pi dt$) zu erhalten, und schließlich unter Vornehmen der Spektralanalyse (69) des so erhaltenen Signals zum Herleiten des Wertes der Doppler-Verschiebung (d) den Absolutwert der Doppler-Verschiebung (d) zu bestimmen,

. unter Vornehmen der Berechnung auf die gleiche Weise der beiden Doppler-Verschiebungen (d1) und (d2) von ausreichend langen, aufeinanderfolgenden Intervallen, beispielsweise in der Größenordnung von mindestens einer bis mehreren Sekunden, und unter Berechnen (41, 42) der Absolutwertdifferenz $|d2| - |d1|$ dieser beiden Verschiebungen zur Herleitung der Richtung der Änderung der Doppler-Verschiebung (d) und somit ihres Vorzeichens das Vorzeichen dieser Doppler-Verschiebung (d) zu bestimmen.

**19.** Terminal nach Anspruch 18, dadurch gekennzeichnet, daß es Mittel zum Ausgleichen dieser Doppler-Frequenzverschiebung (d) unter Verwendung eines Lokaloszillators (48) zur Demodulierung (46, 51, 52) des vom Satelliten ausgehenden, empfangenen Informationssignals (43, 44, 45) umfaßt, dessen Frequenz nicht die für eine solche Demodulierung übliche feste Frequenz (fo) ist, sondern gleich dieser Frequenz (fo) vom Wert dieser Doppler-Frequenzverschiebung (d) beeinflußt, ist.

20. Terminal nach Anspruch 19, dadurch gekennzeichnet, daß zum Ausgleich der Doppler-Verschiebung in Echtzeit während der ganzen Dauer des Vorbeilaufs des Satelliten in dem Terminal zur Ausarbeitung der auf den Steuereingang (49) des Lokaloszillators (48) für die Demodulierung anzuwendenden Doppler-Korrektur (d) eine Korrektur in Echtzeit mittels einer logischen Einrichtung (54) zur automatischen Verfolgung der Doppler-Verschiebung (d) in Abhängikeit von der bekannten Bewegung des betrachteten Satelliten und einer begrenzten Anzahl von Messungen der Doppler-Verschiebung (d) vorgesehen ist.

21. Terminal nach Anspruch 20, dadurch gekennzeichnet:

- daß in diesem logischen Block (54) zur Verfolgung der Doppler-Verschiebung (d) in Echtzeit ein Speicher (56) vorgesehen ist, der eine Tabelle (57) von bekannten zeitlichen Veränderungen der Doppler-Verschiebung für verschiedene maximale Höhen jedes Satelliten enthält,
- daß das Terminal eine begrenzte Reihe von Messungen der Doppler-Verschiebung ausführt und in einem fluchtigen Speicher (58, 59) speichert und diese Messungen in einem logischen Block (60) mit vorher aufgezeichneten Daten der Tabelle (57) vergleicht, um so zu bestimmen, welche die Kurve der Veränderung der Doppler-Verschiebung ist, die zur Zeit berücksichtigt werden muß,
- und daß folglich ein weiterer Berechnungsblock (61) vorgesehen ist, der die Rolle der Voraussage und der Lieferung (49) der Spannung für die Korrektur der Doppler-Verschiebung an den Lokaloszillator (48) für die Demodulierung hat.

22. Verwendung einer Basisstation einer Funktelefonanlage, dadurch gekennzeichnet, daß sie ein Signalisationspaket nach einem der Ansprüche 1 bis 4 aussendet.

## Claims

1. Communication system including means for receiving communication signals transmitted over a plurality of transmission channels characterised in that said receiving means include a device for synchronising to a carrier associated with one of said transmission channels from a single signalling packet of duration T conveyed by said carrier and transmitted periodically with a repetition period Tr, said signalling packet including a reference signal frequency modulated in accordance with a modulation law that varies with the frequency either in a linear manner or in a non-linear manner as a function of time within the packet, so enabling temporal and frequency synchronisation.

2. Communication system according to claim 1 characterised in that said receiving means include a device for synchronising to a carrier associated with one of said transmission channels, a device for estimating the Doppler shift of said carrier and a device for estimating the transmission channel on the basis of said single signalling packet.

3. Communication system according to claim 1 or claim 2 characterised in that said modulation law is a linear function (f) of time.

4. Communication system according to claim 3 characterised in that, said modulation law being applied on two channels in quadrature (I, Q), two separate functions are used for each channel.

5. Communication system according to any one of claims 1 to 3, characterised in that said device for estimating the Doppler shift comprises:

   a local oscillator (VCO),

   - a mixer (M) receiving said carrier and the output signal of said local oscillator (VCO),
   - a filter (BP) receiving the output signal of said mixer (M) and producing an intermediate frequency signal (IF),
   - an analyser circuit (MF1, MF2, MF3, CORR) receiving said intermediate frequency signal (IF) and producing a shift signal (SH) representing the frequency shift due to the Doppler effect between a theoretical frequency ($f_T$) and the frequency of said intermediate frequency signal (IF),
   - a control circuit (CC) controlling said local oscillator (VCO) to establish an estimate of said Doppler shift from said shift signal (SH).

6. Communication system according to claim 5 characterised in that said control circuit (CC) also controls said local

oscillator (VCO) to reduce said frequency shift.

7. Communication system according to claim 5 or claim 6 characterised in that said analyser circuit comprises at least a first filter (MF1) tuned to said reference signal and centred on said theoretical frequency ($f_T$) and a corrector circuit (CORR) to produce a first form factor ($W_1$) of the output signal of this filter and in that the control circuit (CC) controls said local oscillator to maximise said first form factor ($W_1$).

8. Communication system according to claim 7 characterised in that said control circuit (CC) controls said local oscillator (VCO) by successive approximation, applying a frequency correction on either side of the frequency that produces the greatest form factor ($W_1$) in order to search again for the greatest form factor, successive searches being conducted with reducing values of said frequency correction as far as a predetermined correction threshold.

9. Communication system according to claim 7 characterised in that, a shift amplitude ($\Delta f$) having a value substantially equal to the maximum Doppler shift of said intermediate frequency signal (IF), the estimator device further comprises second and third filters (MF2, MF3) tuned to said reference signal and centred on said theoretical frequency ($f_T$) respectively decreased by and increased by said shift amplitude ($\Delta f$), said correction circuit establishing in addition to said first form factor ($W_1$), second and third form factors ($W_2$, $W_3$) of the output signal of said second and third tuned filters (MF2, MF3), respectively, and producing said shift signal (SH) proportional to the opposite of the barycenter of the centre frequencies of said tuned filters (MF1, MF2, MF3) weighted by said corresponding form factors ($W_1$, $W_2$, W3).

10. Communication system according to claim 9 characterised in that said control circuit (CC) controls said local oscillator (VCO) so that said intermediate frequency signal (IF) has a frequency increased by the frequency of said shift signal.

11. Communication system according to any one of claims 1 to 3, characterised in that said synchronisation device comprises:

- a local oscillator (VCO),
- a mixer (M) receiving said carrier and the output signal of said local oscillator (VCO),
- a filter (BP) receiving the output signal of said mixer (M) and producing an intermediate frequency signal (IF),
- an analyser circuit (MF1, MF2, MF3, CORR) receiving said intermediate frequency signal and producing a change frequency signal (CF) if said reference signal is not detected or a frequency shift signal (SH) representing the shift between a theoretical frequency ($f_T$) and the frequency of said intermediate frequency signal (IF),
- a control circuit (CC) controlling said local oscillator (VCO) so that it tunes to said carrier and then, after a measurement period having a predetermined duration greater than or equal to T + Tr, either tunes to another carrier in the presence of said change frequency signal (CF) or reduces the value of said frequency shift signal (SH) in the absence of said change frequency signal (CF).

12. Communication system according to claim 11 characterised in that said analyser circuit comprises at least a first filter (MF1) tuned to said reference signal and centred on said theoretical frequency ($f_T$) and a corrector circuit (CORR) to produce a first form factor ($W_1$) of the output signal of this filter and in that the control circuit (CC) controls said local oscillator to maximise said first form factor ($W_1$).

13. Communication system according to claim 12 characterised in that said control circuit (CC) controls said local oscillator (VCO) by successive approximation, applying a frequency correction on either side of the frequency that produces the greatest form factor ($W_1$) in order to search again for the greatest form factor, the successive searches being effected with reducing values of said frequency correction as far as a predetermined correction threshold.

14. Communication system according to any one of claims 1 to 3, characterised in that the synchronisation device comprises:

- a local oscillator (VCO),
- a mixer (M) receiving said carrier and the output signal of said local oscillator (VCO),
- a filter (BP) receiving the output signal of said mixer (M) and producing an intermediate frequency signal (IF),
- an analyser circuit (MF1, MF2, MF3, CORR) receiving said intermediate frequency signal and producing a frequency shift signal (SH) representing the time interval between reception of two successive signalling packets,

- a control circuit (CC) controlling said local oscillator (VCO) to reduce the shift between said frequency shift signal (SH) and said repetition period $T_r$.

**15.** Communication system according to any one of claims 1 to 3 characterised in that said transmission channel estimator device comprises:

- a local oscillator (VCO),
- a mixer (M) receiving said carrier and the output signal of said local oscillator (VCO),
- a filter (BP) receiving the output signal of said mixer (M) and producing an intermediate frequency signal (IF),
- an analyser circuit receiving said intermediate frequency signal (IF) and transposing it into the baseband to produce a spectrum of said channel,
- a control circuit (CC) controlling said local oscillator (VCO) to establish an estimate of said channel from said channel spectrum.

**16.** Communication system according to claim 15 characterised in that, said reference signal having a frequency of constant slope ($-\mu$), said control circuit (CC) controls said local oscillator (VCO) so that it produces a frequency the slope ($\mu$) of which is opposite that of said reference signal, starting from reception of this signal via the shortest path to of said channel, said channel spectrum having a set of lines each identified by its frequency $r_i$ and its amplitude $h_i$, a particular line corresponding to a path $t_i$ and having a frequency related to the length of that path, said control circuit producing said estimate by characterising each path $t_i$ by its contribution, which is proportional to the amplitude of the corresponding line $h_i$, and by its time-delay $\tau_i$, which has the value $(r_i - r_0)/\mu$, for all values of $\underline{i}$ between 0 and $\underline{n}$ if (n + 1) separate paths are considered.

**17.** Terminal of a mobile radio installation adapted to operate in a communication system according to claim 4 characterised in that it comprises means for, on receiving a packet of this kind otherwise known as a FCCHd burst:

. on the two channels (I) and (Q) of a quadrature receiver, acquiring (17, 18) a number N of samples sufficient to effect the calculation that follows, and storing (22, 23) these samples $s_I(t)$ and $s_Q(t)$, $\underline{t}$ being the "time" variable;

. effecting (24) and storing (25) the various products $s_I(kT) . s_Q(kT)$, kT denoting the "time" variable, discrete representation;

. digital low-pass filtering (26) to eliminate the highest frequency component from each of the products thus obtained;

. then spectrum analysis (28) of the filtered signal (27) obtained in this way to determine the difference ($f_t$) between the instantaneous frequencies of the two quadrature channels (I, Q) at the time of said acquisition;

. knowing the duration ($T_B$) of said FCCHd burst (10) and the instantaneous frequencies ($f_I$) and ($f_Q$) at the end of the burst of the transmitted signal, calculating (32) the time interval (t) between the real start of the FCCHd burst and the start of said acquisition using the equation:

$$\tau = T_B \cdot \frac{f_\tau}{2(f_I - f_Q)}$$

where $f_\tau$ is determined by spectrum analysis and where $f_i$ is assumed to be greater than $f_Q$;

. then synchronising (34) the terminal to the start of this FCCHd burst, which is now known.

**18.** Terminal according to claim 17 characterised in that it comprises means for:

. determining the absolute value of the Doppler shift ($\underline{d}$) by acquiring (22 figure 9, 23 figure 10) a complete FCCHd burst on one of the two channels of the quadrature receiver by storing samples, then, if necessary, processing (35 - 39, 63 - 68) this signal stored in this way and affected by said Doppler shift ($\underline{d}$) in order to retain thereof only the cosine term or the sine term ($2\pi dt$) to which is added a phase term ($\varphi$), 1 and finally carrying out spectrum analysis (69) of the signal thus obtained to deduce therefrom the value of said Doppler shift ($\underline{d}$);

. determining the sign of this Doppler shift ($\underline{d}$) by likewise calculating two Doppler shifts (d1) and (d2) at sufficiently long successive intervals, in the order of at least one second to several seconds, for example, and calculating (41, 42) the difference between the absolute values $|d2| - |d1|$ of these two shifts in order to deduced

therefrom the direction of the variation of the Doppler shift (d) and therefore its sign.

**19.** Terminal according to claim 18 characterised in that it comprises means for compensating the Doppler frequency shift (d) using, to demodulate (46, 51, 52) the received information signal (43, 44, 45) from the satellite, a local oscillator (48) the frequency of which is not the usual fixed frequency (f0) for such demodulation but is instead equal to this frequency (f0) affected by the Doppler frequency shift (d).

**20.** Terminal according to claim 19 characterised in that, to compensate the Doppler shift in real time throughout the motion of the satellite, the terminal includes, for generating the Doppler correction (d) to be applied to the control input (49) of the demodulator local oscillator (48), real time correction by means of a logical device (54) for automatically tracking the Doppler shift (d) according to the known displacement of the satellite in question and a small number of measurements of the Doppler shift (d).

**21.** Terminal according to claim 20 characterised in that:

- the logic unit (54) for tracking the Doppler shift (d) in real time includes a memory (56) storing a table (57) of known time variations of the Doppler shift for different maximal elevations of each satellite;
- the terminal makes and stores in a volatile memory (58, 59) a limited series of measurements of the Doppler shift and compares these measurements, in a logical unit (60), with data pre-stored in said table (57) to determine the Doppler shift variation curve to be used at the time, and
- another calculation unit (61) therefore predicts and supplies (49) the Doppler shift correction voltage to the demodulator local oscillator (48).

**22.** Use of a base station of a mobile radio installation characterised in that it transmits a signalling packet according to any one of claims 1 to 4.

FIG.1

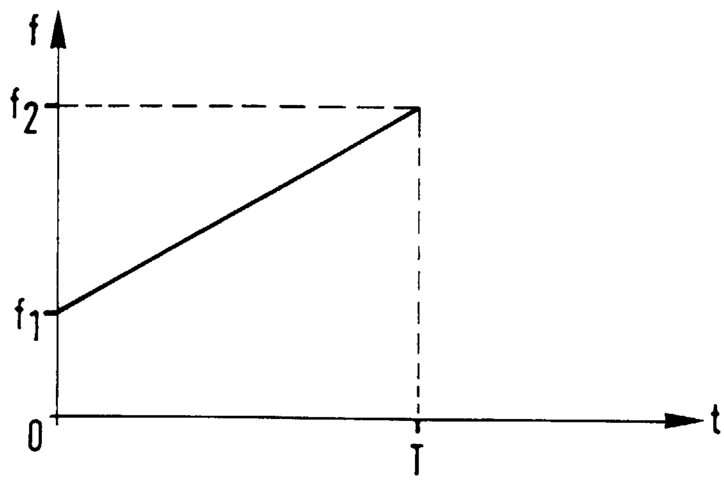


FIG.2

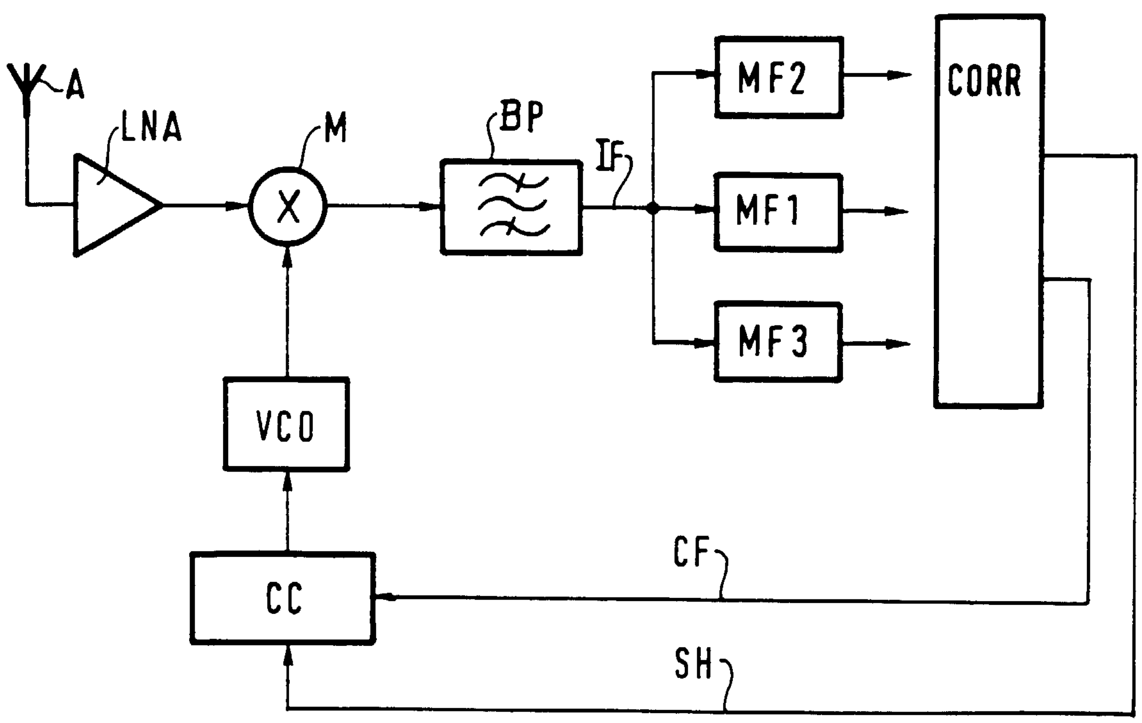

FIG. 3

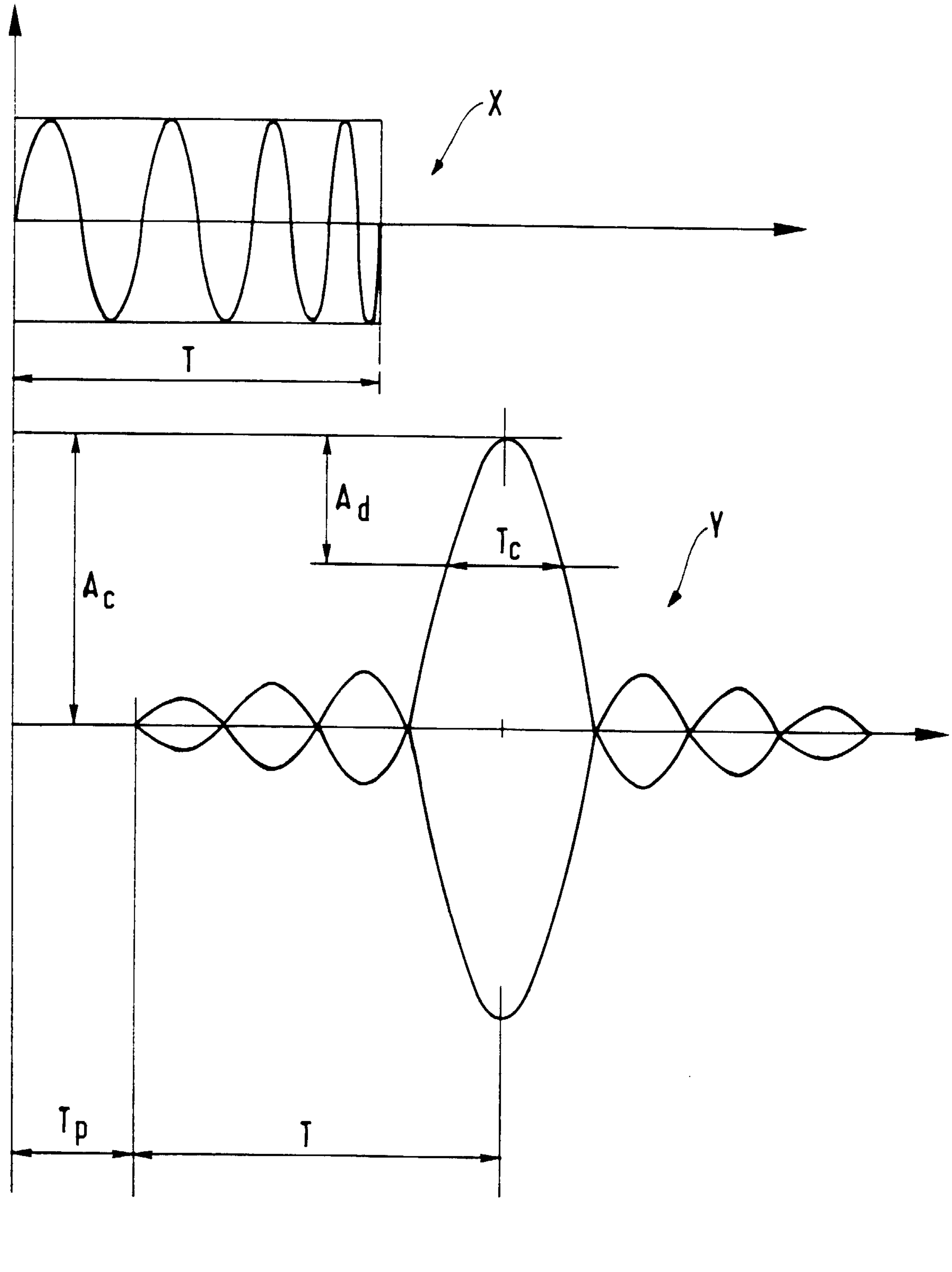

FIG.4

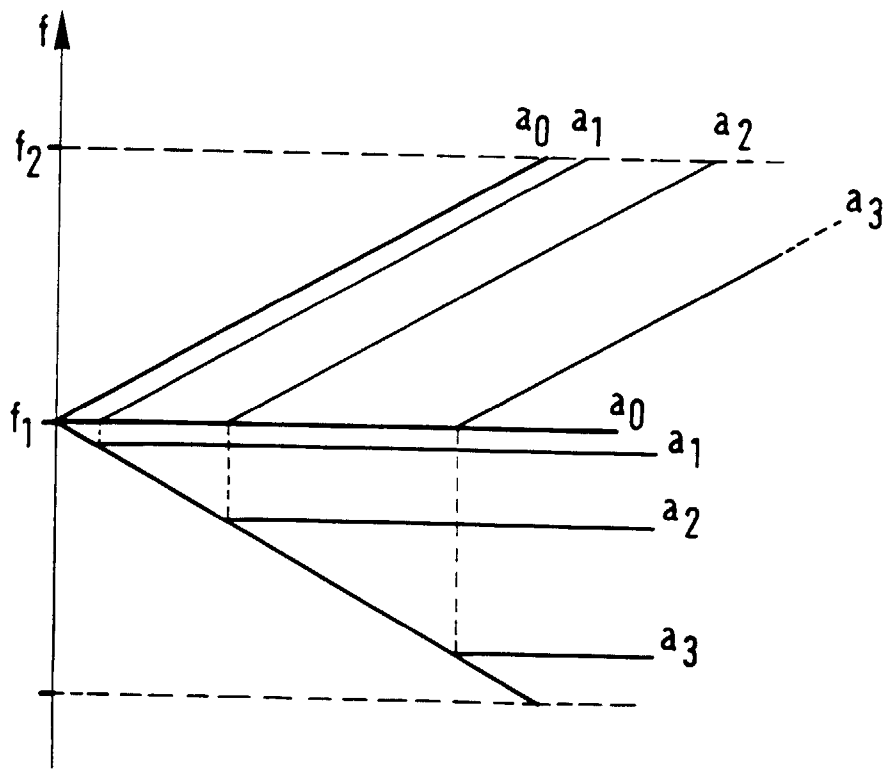

FIG. 5

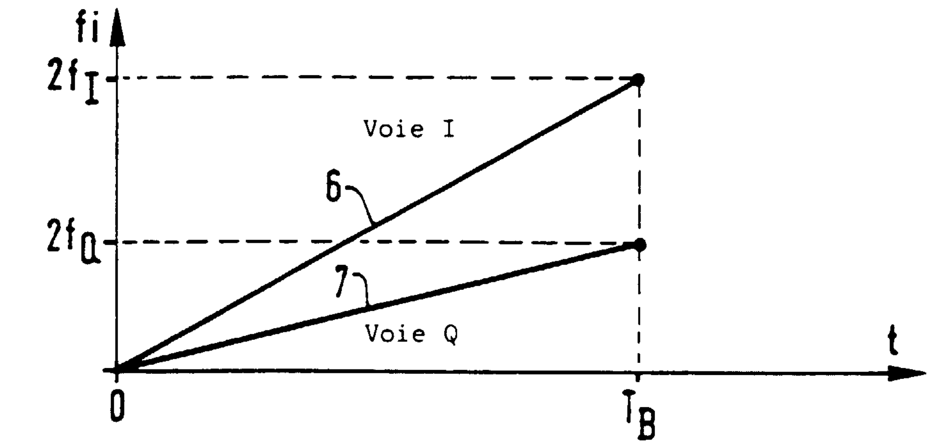
fi
2fI
2fQ
Voie I
6
7
Voie Q
t
0
TB

FIG. 6

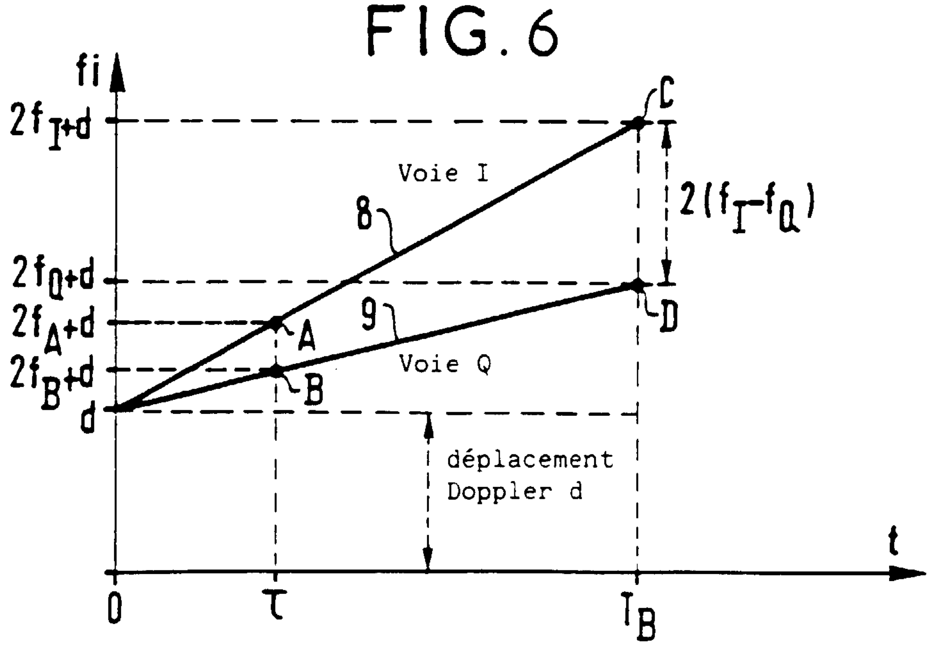
fi
2fI+d
2fQ+d
2fA+d
2fB+d
d
C
Voie I
8
2(fI-fQ)
D
A
9
B
Voie Q
déplacement
Doppler d
t
0
τ
TB

FIG. 7

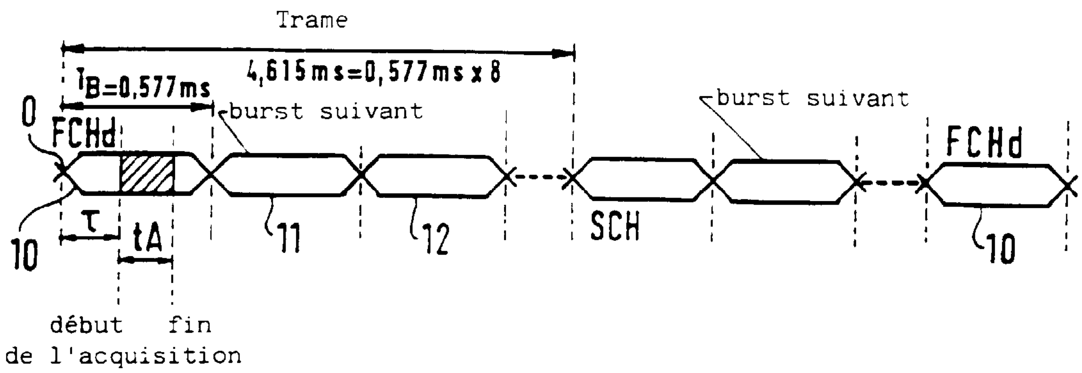
Trame
4,615 ms=0,577 ms x 8
$T_B$=0,577 ms
0
FCHd
burst suivant
burst suivant
FCHd
10
τ
tA
11
12
SCH
10
début fin
de l'acquisition

FIG. 8

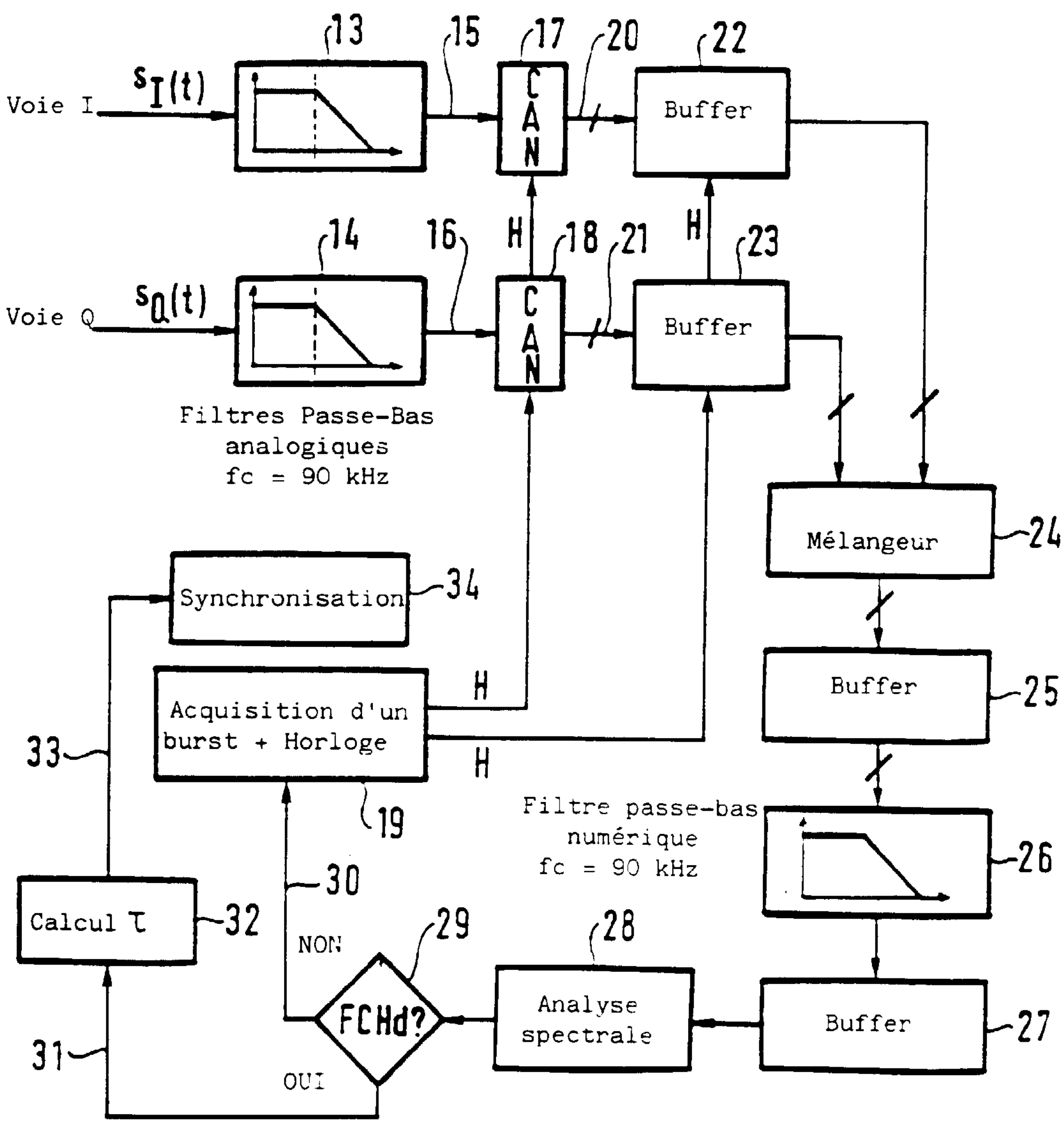
Voie I
$s_I(t)$
13
15
17
20
22
CAN
Buffer
Voie Q
$s_Q(t)$
14
16
H
18
21
H
23
CAN
Buffer
Filtres Passe-Bas
analogiques
fc = 90 kHz
Mélangeur
24
Synchronisation
34
Buffer
25
Acquisition d'un
burst + Horloge
H
H
33
19
Filtre passe-bas
numérique
fc = 90 kHz
26
30
Calcul τ
32
NON
29
28
FCHd?
Analyse
spectrale
Buffer
27
31
OUI

FIG.9

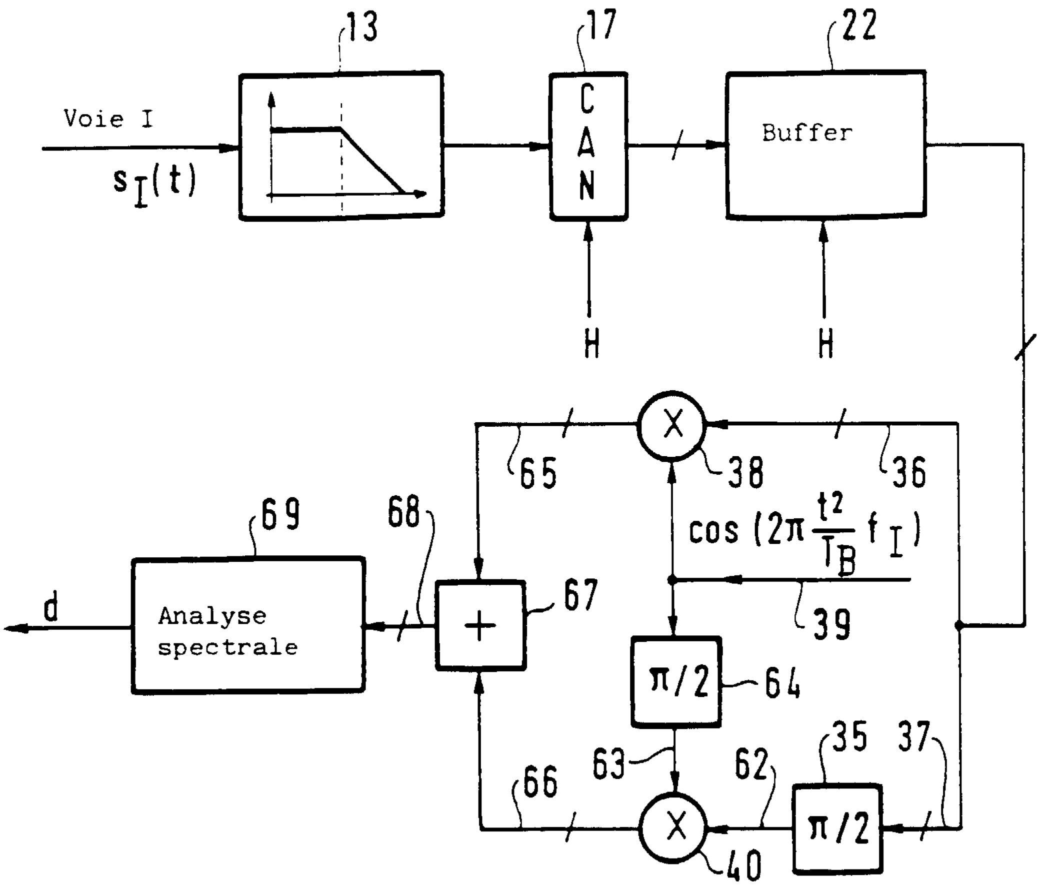
13
17
22
Voie I
$s_I(t)$
C
A
N
Buffer
H
H
X
65
38
36
69
68
$\cos(2\pi \frac{t^2}{T_B} f_I)$
d
Analyse
spectrale
+
67
39
π/2
64
35
37
66
63
62
X
π/2
40

FIG.10

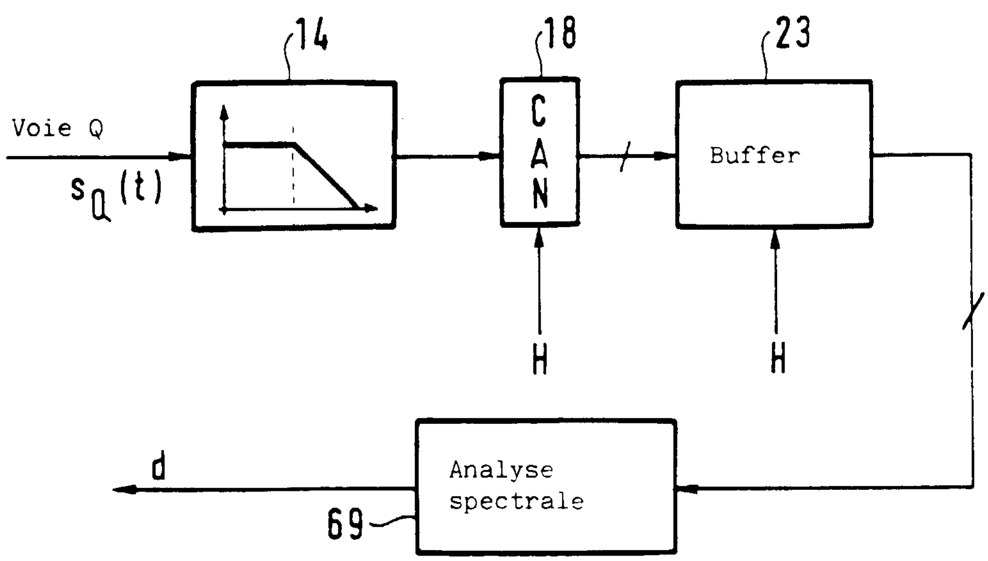
14
18
23
Voie Q
$s_Q(t)$
C
A
N
Buffer
H
H
d
Analyse
spectrale
69

FIG. 11

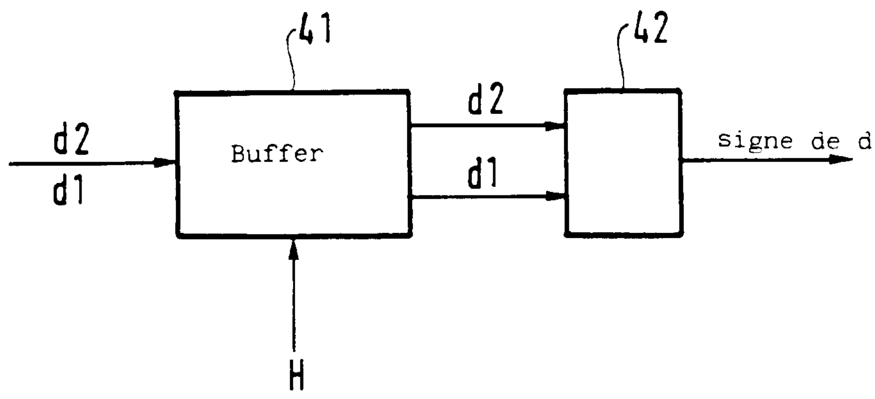
41
42
d2
d1
Buffer
d2
d1
signe de d
H

FIG.12

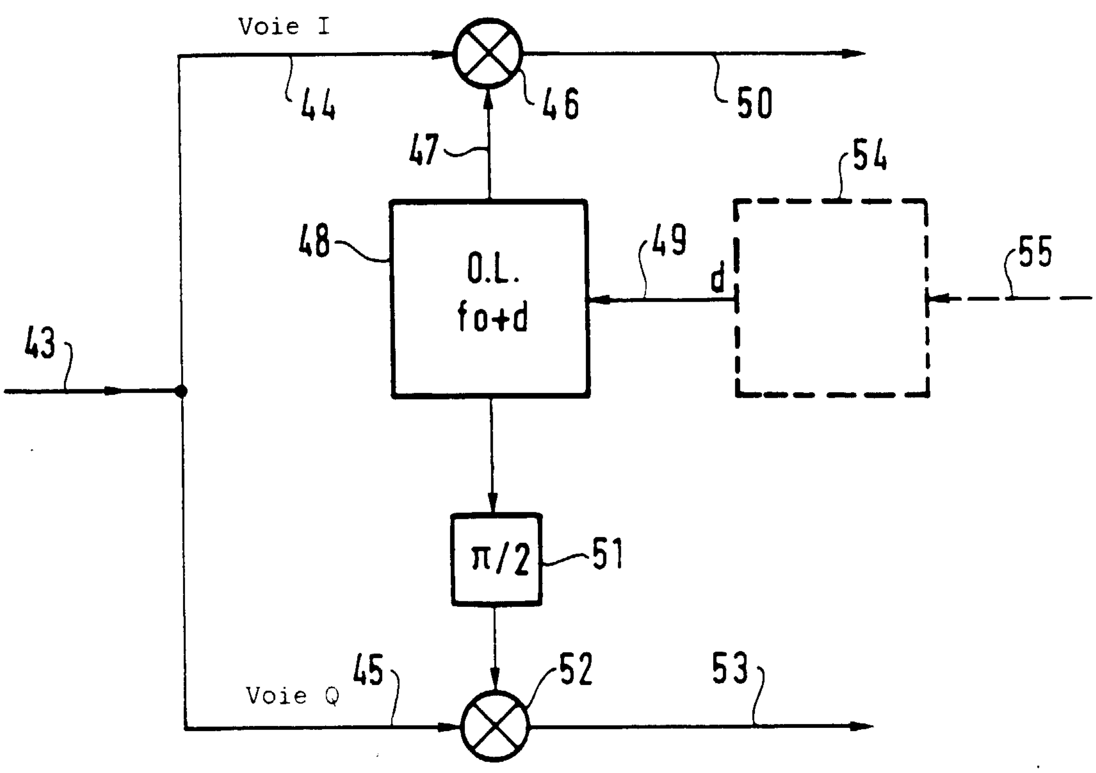
Voie I
44
46
50
47
54
48
O.L.
fo+d
49
d
55
43
π/2
51
45
52
53
Voie Q

FIG.13

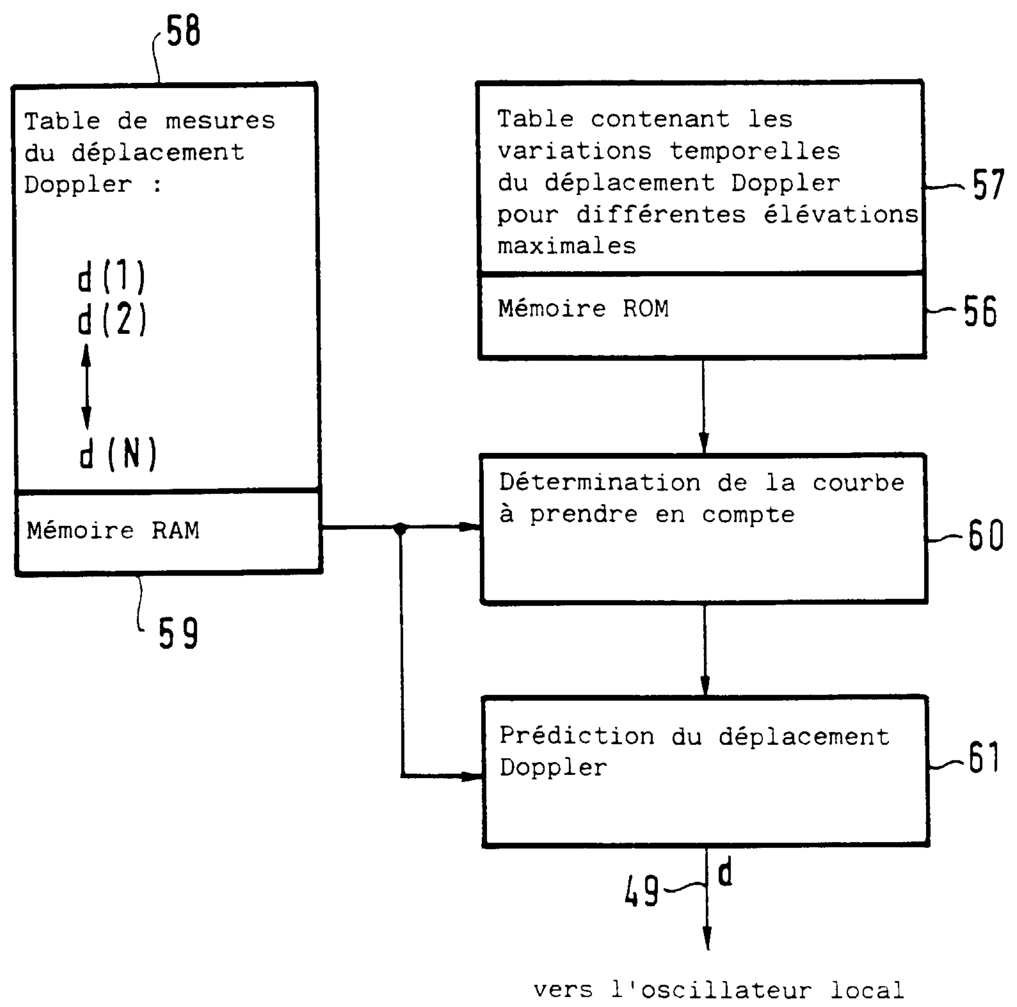
58
Table de mesures du déplacement Doppler :
d(1)
d(2)
d(N)
Mémoire RAM
59
Table contenant les variations temporelles du déplacement Doppler pour différentes élévations maximales
57
Mémoire ROM
56
Détermination de la courbe à prendre en compte
60
Prédiction du déplacement Doppler
61
49
d
vers l'oscillateur local